# EUROPEAN PATENT APPLICATION

(11) **EP 4 108 058 A1**
(43) Date of publication of application: **28.12.2022**
(21) Application number: 21807752.7
(22) Date of filing: 21.04.2021
(51) Int. Cl.: A01D 34/00, A01D 69/02, A01G 3/06

(54) **POWER DEVICE**

(30) Priority: 21.05.2020 CN 202010437519; 12.04.2021 CN 202110387860
(71) Applicant: Nanjing Chervon Industry Co., Ltd., Nanjing, Jiangsu 211106 (CN)
(72) Inventor: LI, Long, Nanjing, Jiangsu 211106 (CN); LI, Li, Nanjing, Jiangsu 211106 (CN); ZHANG, Chenzhong, Nanjing, Jiangsu 211106 (CN); XIAN, Chao, Nanjing, Jiangsu 211106 (CN); ZHANG, Jingru, Nanjing, Jiangsu 211106 (CN)
(74) Representative: Sun, Yiming
(86) International application number: PCT/CN2021/088620
(87) International publication number: WO 2021/233047

(57) **Abstract**

A power unit is configured to be connected to a garden or outdoor power execution device and includes a housing, a motor, and a control assembly. The housing is formed with an accommodation space. The motor is at least partially disposed in the accommodation space. The control assembly is used for controlling the motor. Maximum output power P of the motor is greater than or equal to 1500 Wand less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The power unit outputs high power and has a compact structure.

## Description

This application claims priority to Chinese Patent Application No. 202010437519.1 filed May 21, 2020 and Chinese Patent Application No. 202110387860.5 filed Apr. 12, 2021, the disclosures of which are incorporated herein by reference in their entireties.

### TECHNICAL FIELD

The present application relates to a power unit.

### BACKGROUND

A power unit as an independent power unit is connected to an execution device to drive the execution device to work or run. As a power output unit, the power unit includes a driving member, an energy member, and a control member. However, as a combination of multiple members, the power unit has relatively great disadvantages in volume, weight, heat dissipation, and the like. How to provide a power unit that outputs great power and has a compact structure is an urgent technical problem to be solved at present.

### SUMMARY

The present application provides a power unit that outputs great power and has a compact structure.

An example provides a power unit, which is configured to be connected to a garden or outdoor power execution device. The power unit includes a housing, a motor, a power supply assembly, and a control assembly. The housing is formed with an accommodation space. The motor is at least partially disposed in the accommodation space. The power supply assembly is at least partially disposed on the housing and used for powering the motor. The control assembly is used for controlling the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The housing includes a connection surface for a connection to at least part of the power supply assembly, and the connection surface is configured to obliquely intersect with a preset plane extending along a front and rear direction.

In some examples, the power supply assembly includes a first-type power supply and a second-type power supply, where the first-type power supply is disposed on the connection surface, and the second-type power supply is disposed at an upper end of the housing.

In some examples, the first-type power supply and the second-type power supply are perpendicular to each other.

In some examples, the housing includes a first-type interface and a second-type interface, where the first-type interface is used for a connection to a first-type power supply, and the second-type interface is used for a connection to a second-type power supply.

In some examples, the connection surface includes a first connection surface and a second connection surface, where the first connection surface and the second connection surface are further symmetrical about the preset plane and form a clamping region that intersects with the motor.

In some examples, the motor is at least partially disposed within the clamping region.

In some examples, in a plane perpendicular to the front and rear direction, a projection of the motor in the plane along the front and rear direction at least partially coincides with a projection of the first-type power supply in the plane along the front and rear direction.

An example provides a power unit, which is configured to be connected to a garden or outdoor power execution device. The power unit includes a housing, a motor, a control assembly, and a power supply device. The housing is formed with an accommodation space. The motor is at least partially disposed in the accommodation space. The control assembly is used for controlling the motor. The power supply device is used for powering the motor. Maximum power P of the motor is greater than or equal to 550 W and less than or equal to 3000 W; the power supply assembly includes a first-type power supply or a second-type power supply, where the first-type power supply includes at least one battery pack; and the housing is provided with a connection portion connected to the first-type power supply, and the second-type power supply is an integrated power supply.

In some examples, the housing includes a first housing as a base and a second housing as a main body, where the second housing is disposed on an upper side of the first housing.

In some examples, the first housing covers at least part of the second housing.

An example provides a power unit, which is configured to be connected to a garden or outdoor power execution device. The power unit includes a housing, a motor, and a control assembly. The housing is formed with an accommodation space. The motor is at least partially disposed in the accommodation space. The control assembly is used for controlling the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg.

In some examples, the ratio of the maximum output power P to the mass M1 is higher than or equal to 120 W/kg and lower than or equal to 500 W/kg.

In some examples, the mass M1 of the power unit is greater than or equal to 10 kg and less than or equal to 12 kg.

In some examples, the maximum output power P of the motor is greater than or equal to 2000 W and less than or equal to 4000 W.

In some examples, the motor is provided with a motor shaft, where the motor shaft is connected to a cutting accessory and capable of driving the cutting accessory to rotate; and the cutting accessory rotates around the motor shaft and has a rotation radius R, where the rotation radius R is greater than or equal to 200 mm and less than or equal to 325 mm, and a product of the maximum output power P of the motor and the rotation radius R is greater than or equal to 300 KW.mm and less than or equal to 1787.5 KW.mm.

In some examples, a weight of a power supply assembly M2 is greater than or equal to 1.3 kg and less than or equal to 8 kg.

In some examples, a weight of the power unit connected to a power supply assembly is greater than or equal to 9.3 kg and less than or equal to 22.5 kg.

In some examples, the power unit has a first center of gravity P1, and the execution device has a second center of gravity P2, where a distance between the first center of gravity P1 and the second center of gravity P2 along a direction in which the execution device moves forward is greater than or equal to 0 mm and less than or equal to 335 mm.

In some examples, the distance between the first center of gravity P1 and the second center of gravity P2 along the direction in which the execution device moves forward is greater than or equal to 0 mm and less than or equal to 200 mm.

In some examples, a power supply assembly is further included, where the power supply assembly is at least partially disposed on a front side of a power unit along the direction in which the execution device moves forward.

In some examples, a power supply assembly is further included, where the power supply assembly includes a first-type power supply and a second-type power supply, the first-type power supply is at least partially disposed on a front side of a power unit along the direction in which the execution device moves forward, and the second-type power supply is disposed on an upper side of the power unit.

In some examples, the power unit includes a first plane extending substantially along a front and rear direction, the power unit is substantially symmetrical about the first plane, a distance between the first center of gravity and the first plane along a left and right direction perpendicular to the first plane is greater than or equal to 0 mm and less than or equal to 80 mm.

In some examples, the power unit includes a first plane extending substantially along a front and rear direction, the execution device is substantially symmetrical about the first plane, and a distance between the second center of gravity and the first plane along a left and right direction perpendicular to the first plane is greater than or equal to 0 mm and less than or equal to 100 mm.

In some examples, the power unit includes a first plane extending substantially along a front and rear direction, the power unit is substantially symmetrical about the first plane, and a distance between the first plane and a left side of the execution device along a left and right direction perpendicular to the first plane is greater than or equal to 80 mm and less than or equal to 150 mm.

In some examples, the power unit includes a first plane extending substantially along a front and rear direction, the power unit is substantially symmetrical about the first plane, and a distance between the first plane and a right side of the execution device along a left and right direction perpendicular to the first plane is greater than or equal to 80 mm and less than or equal to 150 mm.

In some examples, an execution device includes a first walking assembly and a second walking assembly, where the first walking assembly is disposed on a front side of the second walking assembly, the first walking assembly has a first rotation axis, the second walking assembly has a second rotation axis, and a distance between the first center of gravity and the first rotation axis along a direction in which the execution device moves forward is greater than or equal to 74 mm and less than or equal to 465 mm.

In some examples, an execution device includes a first walking assembly and a second walking assembly, where the first walking assembly is disposed on a front side of the second walking assembly, the first walking assembly has a first rotation axis, the second walking assembly has a second rotation axis, and a distance between the second center of gravity and the second rotation axis along a direction in which the execution device moves forward is greater than or equal to 0 mm and less than or equal to 200 mm.

In some examples, the housing includes a first housing made of a first-type material and a second housing made of a second-type material, where the first housing is a base, the second housing is a main body, and a tensile strength of the first-type material is greater than a tensile strength of the second-type material.

In some examples, the first housing is made of a metal material, and the second-type material is made of a plastic material.

In some examples, an outer surface of the housing has a first surface area S1, the first housing has a second surface area S2 after the first housing is mounted to the power unit, and a ratio of the first surface area S1 to the second surface area S2 is higher than or equal to 1.5 and lower than or equal to 2.

In some examples, the tensile strength of the first-type material is greater than or equal to 225 MPa and less than or equal to 350 MPa.

In some examples, the tensile strength of the second-type material is greater than or equal to 56 MPa and less than or equal to 215 MPa.

In some examples, the first housing has a first mass M1 and the second housing has a second mass M2, where a ratio of the first mass M1 to the second mass M2 is higher than or equal to 3 and lower than or equal to 5.

In some examples, the first housing extends across the power unit along a front and rear direction and at least partially extends along an up and down direction.

In some examples, the second housing is provided, along an up and down direction, with a connection portion connected to the first housing.

In some examples, the second housing is disposed on an upper side of the first housing, and the first housing covers at least part of the second housing.

In some examples, thermal conductivity of the first housing is higher than thermal conductivity of the second housing.

An example provides a power unit system. The power unit system includes a power unit and an execution device. The execution device is connectable to the power unit. The power unit includes a housing, a motor, and a control assembly. The housing is formed with an accommodation space. The motor is disposed in the accommodation space. The control assembly is used for controlling the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg.

In some examples, the execution device has a mass M3, and a ratio of the mass M1 of the power unit to the mass M3 of the execution device is higher than or equal to 0.25 and lower than or equal to 0.46.

In some examples, the execution device has a mass M3, and a ratio of the mass M1 of the power unit to the mass M3 of the execution device is higher than or equal to 0.3 and lower than or equal to 0.4.

An example provides a power unit, which is configured to be connected to a garden or outdoor power execution device. The power unit includes a housing, a motor, and a power supply assembly. The housing is formed with an accommodation space. The motor is at least partially disposed in the accommodation space. The power supply assembly is at least partially disposed on the housing and used for powering the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The power unit further includes a first switch for controlling the motor to start, where the first switch is a non-contact switch and includes an operation portion that is operable and a trigger member capable of being triggered, and the trigger member is configured to turn on a power supply circuit of the motor.

In some examples, an operation assembly includes an operation member and a rotary member, the trigger member includes a trigger portion, and the operation member is connected to the rotary member and capable of controlling the rotary member to rotate around a rotation shaft so as to trigger the trigger portion.

In some examples, the rotary member includes a first position and a second position, where the rotary member is close to the trigger portion and the trigger portion is triggered when the rotary member is in the first position, and the rotary member is away from the trigger portion and the trigger portion is not triggered when the rotary member is in the second position.

In some examples, the trigger portion is a Hall element, and the rotary member is connected to a magnetic member, where the power supply circuit of the motor is turned on when the magnetic member is close to the Hall element or in contact with the Hall element.

In some examples, the first switch further includes an elastic member that provides a preload force between the operation member and the rotary member.

In some examples, when the operation member is operated such that the rotary member rotates from the first position to the second position, the rotary member is enabled by an elastic member to automatically reset from the second position to the first position.

In some examples, the operation member is a cable, where one end of the operation member is connected to the rotary member, and another end of the operation member is connected to the execution device.

In some examples, a second switch for controlling a working state of the power supply assembly is included, where the second switch is further provided with an indicator light for indicating the working state of the power supply assembly, and the indicator light is configured to be capable of showing light of different colors or light of different shapes when the power supply assembly is in different states.

In some examples, the indicator light is arranged around the second switch.

In some examples, when the second switch is triggered so as to power the power supply assembly, the power supply assembly and the indicator light are turned on, and the indicator light shows the working state of the power supply assembly.

An example provides a power unit, which is configured to be connected to a garden or outdoor power execution device. The power unit includes a housing and a motor. The housing is formed with an accommodation space. The motor is at least partially disposed in the accommodation space. The motor includes a motor shaft, maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and the motor shaft includes a first drive portion and a second drive portion. The power unit further includes a first transmission portion mating with the first drive portion and a second transmission portion mating with the second drive portion, where the first transmission portion outputs a first transmission force, and the second transmission portion outputs a second transmission force.

In some examples, the motor shaft includes a first end and a second end, where the first drive portion is disposed at the first end, and the second drive portion is disposed between the first end and the second end.

In some examples, the first drive portion is configured to be an external thread structure, and the first transmission portion is provided with an internal thread structure mating with the external thread structure.

In some examples, the second transmission portion includes a transmission belt, a flywheel, and an output end, where the transmission belt connects the second drive portion to the output end and is capable of transmitting power from the second drive portion to the output end.

In some examples, a flywheel is configured to have a first state in which the flywheel is close to a transmission belt and a second state in which the flywheel is away from the transmission belt, where the transmission belt is compressed when the flywheel is in the first state, and the transmission belt is released when the flywheel is in the second state.

In some examples, the second drive portion is configured to be a gear structure or a pulley structure.

In some examples, the second drive portion is fixedly connected to the motor shaft, or the second drive portion and the motor shaft are integrally formed.

In some examples, the first drive portion coincides with the second drive portion, and the first transmission portion and the second transmission portion are both connected to the first drive portion or the second drive portion.

In some examples, the first transmission portion and the second transmission portion at least partially coincide with each other and are both connected to the first drive portion or the second drive portion.

An example provides a power transmission system. The power transmission system includes a power unit and an execution device. The power unit includes a housing, a motor, and a power supply assembly. The housing is formed with an accommodation space. The motor is disposed in the accommodation space. The power supply assembly is at least partially disposed on the housing and used for powering the motor. The execution device includes a working accessory and walking assemblies. The power unit is detachably connected to the execution device, and the motor includes a motor shaft that includes a first drive portion and a second drive portion, where the first drive portion is used for driving the working accessory, and the second drive portion is used for driving the walking assemblies.

An example provides a power unit, which is configured to be connected to a garden or outdoor power execution device. The power unit includes a housing, a motor, and a control assembly. The housing is formed with an accommodation space. The motor is disposed in the accommodation space. The control assembly is used for controlling the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The housing is formed with an airflow inlet and an airflow outlet, and the motor is connected to or formed with a first fan, where the first fan is capable of forming a first heat dissipation air path when driven by the motor. The power unit further includes a second fan disposed in the accommodation space, where the second fan is capable of generating a second heat dissipation air path.

In some examples, the airflow outlet includes a first air outlet and a second air outlet that are disposed on two sides of the housing.

In some examples, the power unit includes a first heat dissipation mode and a second heat dissipation mode, where both the first fan and the second fan are turned on when the power unit is in the first heat dissipation mode; and the first fan is turned on and the second fan is turned off when the power unit is in the second heat dissipation mode.

In some examples, when the power unit is in the first heat dissipation mode, a heat dissipation airflow flows in from the airflow inlet and flows out from the first air outlet and the second air outlet separately.

In some examples, when the power unit is in the second heat dissipation mode, a heat dissipation airflow flows in from the airflow inlet and the first air outlet and flows out from the second air outlet.

In some examples, the power unit includes a first power interval and a second power interval and includes a critical value between the first power interval and the second power interval, where the power unit is in the second heat dissipation mode when output power of the power unit is less than the critical value, and the power unit is in the first heat dissipation mode when the output power of the power unit is greater than or equal to the critical value.

In some examples, the first heat dissipation air path and the second heat dissipation air path at least partially coincide with each other.

In some examples, the first heat dissipation air path and the second heat dissipation air path are separated from each other.

In some examples, the airflow inlet is further provided with a cavity that includes a baseplate and a passage, and the baseplate is oblique from top to bottom.

In some examples, the first fan has first power P1 and the second fan has second power P2, where a ratio of the first power P1 to the second power P2 is higher than or equal to 1 and lower than or equal to 10.

An example provides a power unit, which is configured to be connected to a garden or outdoor power execution device. The power unit includes a housing, a motor, and a control assembly. The housing is formed with an accommodation space. The motor is at least partially disposed in the accommodation space. The control assembly is used for controlling the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The housing includes a first housing made of a first-type material and a second housing made of a second-type material, where the control assembly is at least partially connected to the first housing, and thermal conductivity of the first-type material is higher than thermal conductivity of the second-type material.

In some examples, the first-type material is a metal material, and the second-type material is a plastic material.

In some examples, an outer surface of the housing has a first surface area S1, the second housing has a second surface area S2 after the second housing is mounted to the power unit, and a ratio of the first surface area S1 to the second surface area S2 is higher than or equal to 1.5 and lower than or equal to 2.

In some examples, the control assembly is fixedly connected to the first housing.

In some examples, a distance between the control assembly and the first housing is less than a preset value.

In some examples, the control assembly includes a first control board and a second control board, where the first control board is configured to extend substantially in a first plane, and the second control board is configured to extend substantially in a second plane; and the power unit further includes a center plane extending substantially along a front and rear direction, and at least one of the first plane and the second plane intersects with the center plane.

In some examples, the first control board and the second control board intersect with each other and are in a "V" shape.

In some examples, a power supply assembly for driving the motor is further included, where the housing further includes a connection surface for a connection to at least part of the power supply assembly.

An example provides a power unit, which is configured to be connected to a garden or outdoor power execution device. The power unit includes a housing, a motor, and a control assembly. The housing is formed with an accommodation space. The motor is at least partially disposed in the accommodation space. The control assembly is used for controlling the motor. The housing includes a housing portion whose thermal conductivity is higher than or equal to 80 W/(m*K), and the control assembly is at least partially connected to the housing portion.

In some examples, the housing includes a first housing made of a first-type material and a second housing made of a second-type material, where the first housing constitutes the housing portion, and thermal conductivity of the first-type material is higher than thermal conductivity of the second-type material.

An example provides a power unit, which is configured to be connected to a garden or outdoor power execution device. The power unit includes a housing, a motor, and a power supply assembly. The housing is formed with an accommodation space. The motor is at least partially disposed in the accommodation space. The power supply assembly is at least partially disposed on the housing and used for powering the motor. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The power unit further includes a protective cover for covering at least part of the power supply assembly, where the protective cover includes a first cover body made of a first material and a second cover body made of a second material.

In some examples, the first cover body is fixedly connected to the second cover body.

In some examples, the power supply assembly includes a first-type power supply and a second-type power supply, where the first-type power supply is arranged around the housing.

In some examples, the protective cover covers at least part of a first-type power supply.

In some examples, the first cover body is made of plastic, and the second cover body is made of metal.

In some examples, the housing includes a first housing and a second housing, and the protective cover is disposed on the second housing and rotatable around a rotation shaft disposed on the second housing.

In some examples, a second housing is further formed with an extension portion, where the extension portion is connected to or formed with a rotation shaft, and the second housing is at least partially connected to the extension portion.

In some examples, a first housing is further formed with or connected to a connection assembly for a connection to the protective cover.

In some examples, a connection assembly is configured to be a magnetic member, and a buffer portion is further connected or formed around the magnetic member.

In some examples, a control assembly connected to the motor and the power supply assembly is further included, where the control assembly includes a circuit board, a heat dissipation plate, a motherboard, and a power management board that are integrated and assembled into the accommodation space.

An example provides a power unit applicable to a power tool. The power unit includes a housing, a motor, and a power supply assembly. The housing is formed with an accommodation space. The motor is disposed in the accommodation space. The power supply assembly is at least partially disposed on the housing and used for powering the motor. A first switch for controlling a working state of the power supply assembly is further included. Maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg. The first switch is further provided with an indicator light for indicating the working state of the power supply assembly, and the indicator light is configured to be capable of showing light of different colors or light of different shapes when the power supply assembly is in different states.

In some examples, the indicator light is electrically connected to the power supply assembly, and the first switch is electrically connected to the power supply assembly.

In some examples, the indicator light is arranged around the first switch.

In some examples, when the first switch is triggered so as to power the power supply assembly, the power supply assembly and the indicator light are turned on, and the indicator light shows the working state of the power supply assembly.

In some examples, a power management board is further included. The power management board is electrically connected to the power supply assembly and the first switch.

In some examples, when the first switch is triggered so as to power the power supply assembly, the power management board is capable of acquiring state information of the power supply assembly and transmitting the state information to the indicator light, and the indicator light shows the light of different colors according to the state information.

In some examples, the first switch is located on the housing and disposed on an outer surface of the housing where the first switch is capable of being triggered.

In some examples, a second switch for controlling a rotational speed of the motor is further included, where the second switch is disposed on an outer surface of the housing where the second switch is capable of being triggered.

In some examples, a third switch for controlling an electric motor to start is further included, where the third switch includes a first terminal connected to the power supply assembly and a second terminal connected to an external terminal.

In some examples, the external terminal is connectable to a preset position and operable so as to control the electric motor.

In the present application, the ratio of the maximum output power of the power unit to the mass of the power unit is limited within a preset range so that the power unit can output high power and has a compact structure.

### BRIEF DESCRIPTION OF DRAWINGS

FIG.1 is a perspective view of a power unit in a first example;
FIG. 2 is a perspective view of the power unit in FIG. 1 mounted onto an execution device;
FIG. 3 is an exploded view of the power unit in FIG. 1 with a second-type power supply separated;
FIG. 4 is an exploded view of the power unit in FIG. 1;
FIG. 5 is an exploded view of the power unit in FIG. 1 from another angle;
FIG. 6 is a partial enlarged view of part A of the power unit in FIG. 4;
FIG. 7 is a sectional view of the power unit in FIG. 1;
FIG. 8 is a sectional view of the power unit in FIG. 1 from another angle;
FIG. 9 is a perspective view of the power unit in FIG. 1 with a fixing member in an unlocked position after a second-type power supply is removed;
FIG.10 is a perspective view of a power unit in a second example;
FIG. 11 is a perspective view of the power unit in FIG. 10 from another angle;
FIG. 12 is a perspective view of the power unit in FIG. 11 with a second-type power supply removed;
FIG. 13 is a perspective view of the power unit in FIG. 12 with a protective cover in an open state;
FIG. 14 is a perspective view of the power unit in FIG. 13 with the protective cover disassembled;

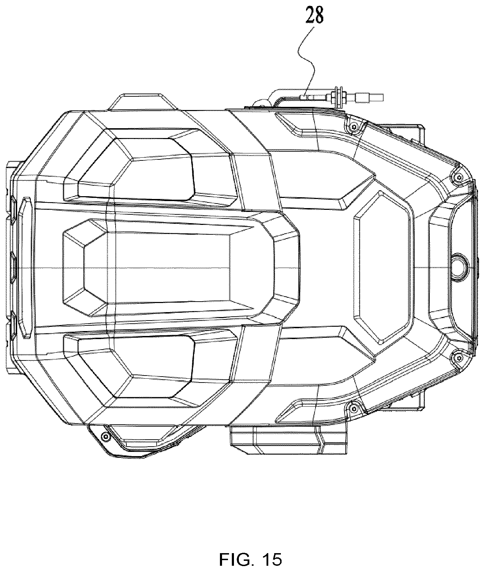

FIG. 15 is a top view of the power unit in FIG. 10 with a second-type power supply removed;
FIG. 16 is a partial enlarged view of part B of the power unit in FIG. 10;
FIG. 17 is a perspective view of a third switch of the power unit in FIG. 10;
FIG. 18 is a schematic view showing a drive connection manner for a motor of the power unit in FIG. 10;
FIG. 19 is a sectional view of the power unit in FIG. 10;
FIG. 20 is a partial enlarged view of part C of the power unit in FIG. 19; and

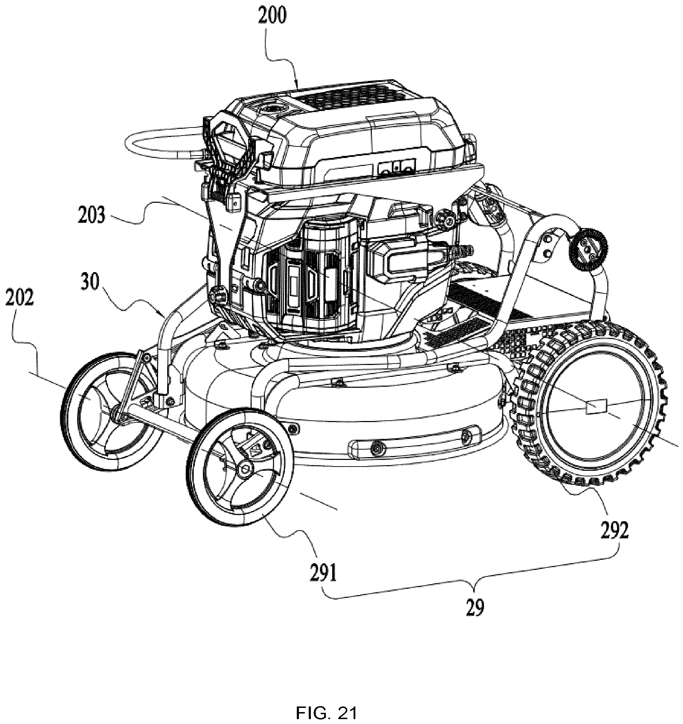

FIG. 21 is a perspective view of the power unit in FIG. 10 mounted onto an execution device.

### DETAILED DESCRIPTION

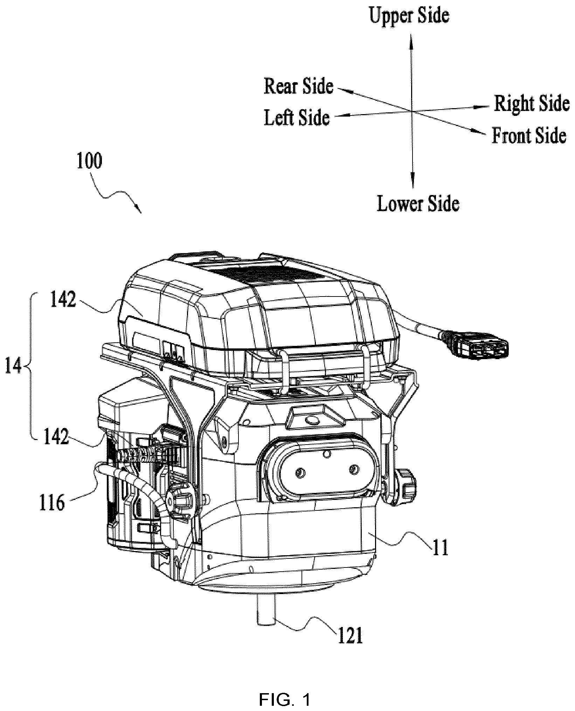

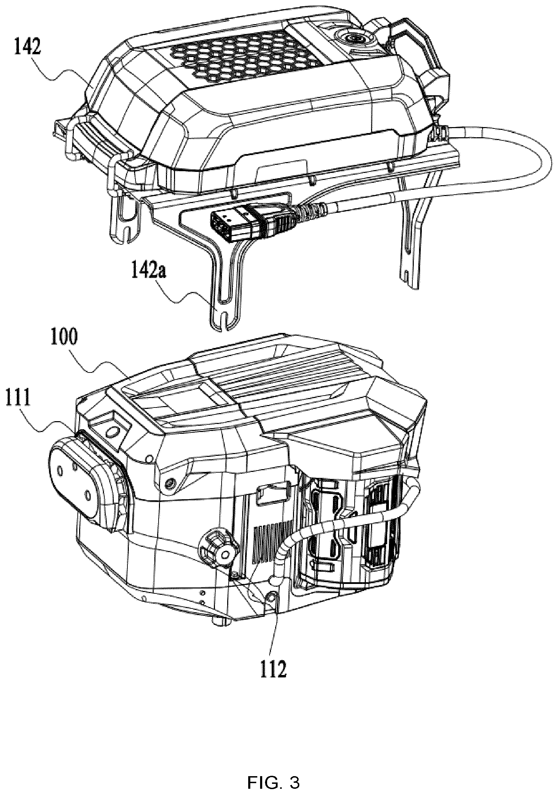

FIGS. 1 to 4 show a power unit 100 that can output a drive force. The power unit 100 includes a housing 11, a motor 12, a control assembly 13, a power supply assembly 14, and the like. The housing 11 is formed with an accommodation space 113 for accommodating the motor 12 and at least part of the control assembly 13. The housing 11 is further formed with a connection portion connectable to the power supply assembly 14. The power supply assembly 14 provides energy to rotate the motor 12, and the control assembly 13 is used for controlling the motor 12 and the power supply assembly 14 such that the motor 12 switches between multiple preset power modes. The power unit 100 is connectable to an execution device 15 such as a mower and a snow thrower and can drive the execution device 15 to run. The power unit 100 has functions such as power output, energy integration, control integration, and heat dissipation integration. The execution device 15 such as the mower and the snow thrower can be used as a frame or a support structure and can be driven by the power unit 100 for a user to operate. In fact, the execution device 15 only needs to have a frame for the connection to the power unit 100, an accessory that can be driven, and an operation portion that can be operated by the user. Various modules of the power unit 100 are described below in detail.

As an implementation manner, the motor 12 includes an output end 121 for driving the accessory to run. In a working process of the power unit 100, the motor 12 runs at a high speed and generates relatively much heat. However, as the integration of power, control, and the like, the power unit 100 has a limited space within the housing 11. Therefore, relatively much heat is generated in the accommodation space 113 when the power unit 100 outputs relatively high power. As an implementation manner, the housing 11 is provided with an airflow inlet 111 and an airflow outlet 112. Specifically, the motor 12 may be an electric motor, and a first fan 122 is disposed on the motor 12. When the motor 12 runs, the first fan 122 rotates at a high speed to create a negative pressure in the accommodation space 113, thereby generating a heat dissipation air path that enters the accommodation space 113 from the airflow inlet 111, flows through the control assembly 13 and the motor 12, and flows out from the airflow outlet 112. As an implementation manner, the control assembly 13 includes parts such as a circuit board 131 and a heat sink 132, where the heat sink 132 is connected to the circuit board 131 and used for assisting the circuit board 131 in heat dissipation. A second fan 117 is further disposed in the accommodation space 113 of the power unit 100. The second fan 117 is disposed on a route along which the heat dissipation air path circulates and can be individually driven to generate heat dissipation air. In this example, the first fan 122 is specifically a centrifugal fan that can generate a heat dissipation airflow having a preset direction. To describe the present application clearly, a front side, a rear side, a left side, a right side, an upper side, and a lower side as shown in FIG. 1 are further defined. As an optional example, the airflow outlet 112 includes a first air outlet 112a and a second air outlet 112b, where the first air outlet 112a is disposed on the left side of the power unit 100, and the second air outlet 112b is disposed on the right side of the power unit 100. The power unit 100 includes a first heat dissipation mode and a second heat dissipation mode. When the power unit 100 is in the first heat dissipation mode, both the first fan 122 and the second fan 117 are turned on, and a heat dissipation airflow enters the accommodation space 113 from the airflow inlet 111, flows through the control assembly 13 and the motor 12, and then flows out from the first air outlet 112a and the second air outlet 112b separately. When the power unit 100 is in the second heat dissipation mode, the first fan 122 is turned on and the second fan 117 is turned off, and a heat dissipation airflow flows into the accommodation space 113 from the airflow inlet 111 and the first air outlet 112a, flows through the control assembly 13 and the motor 12, and then flows out from the second air outlet 112b. In this example, the first fan 122 is the centrifugal fan. When started, the first fan 122 can generate the heat dissipation airflow flowing from the left side to the right side. Thus, when the power unit 100 is in the second heat dissipation mode, air enters from both the airflow inlet 111 and the original first air outlet 112a that functions as an auxiliary air inlet, and the heat dissipation air is discharged from the second air outlet 112b.

As an implementation manner, the control assembly 13 can control the power unit 100 to switch between the first heat dissipation mode and the second heat dissipation mode. The power unit 100 includes a first power interval and a second power interval, and a critical value is set between the first power interval and the second power interval, where a value in the first power interval is less than a value in the second power interval, and any value in the first power interval is less than any value in the second power interval. When output power of the power unit 100 is greater than or equal to the critical value and is in the second power interval, the power unit 100 can switch to the first heat dissipation mode. When the output power of the power unit 100 is in the first power interval and is less than the critical value, the power unit 100 is in the second heat dissipation mode. When the output power of the power unit 100 is within the range of the first power interval, heat released by the motor 12 and the control assembly 13 in the working process is within a preset range, and the first fan 122 working alone can effectively send out the heat in the accommodation space 113. When the output power of the power unit 100 is greater than or equal to the critical value, the heat released by the motor 12 and the control assembly 13 in the working process exceeds the preceding presetrange, the first fan 122 working alone fails to discharge all the heat in the accommodation space 113, and the motor 12 or the control assembly 13 may be damaged due to long-term work. In this case, a second motor 12 needs to start and work together with a first motor 12 so that the heat in the accommodation space 113 is effectively discharged. Thus, the power unit 100 can maintain a working state with high power output for a long term, and the service life of the power unit 100 is not affected by the heat dissipation problem.

To increase the sensitivity of the power unit 100 in heat dissipation, a temperature sensor (not shown in the figure) may be further disposed in the accommodation space 113. The temperature sensor can sense a temperature in the accommodation space 113 and near the motor 12 and the control assembly 13 and output an electrical signal to the control assembly 13 according to a real-time temperature so that the power unit 100 is controlled to switch between the first heat dissipation mode and the second heat dissipation mode. That is, the power unit 100 is in the first heat dissipation mode when the temperature is lower than a preset value, and the power unit 100 is in the second heat dissipation mode when the temperature is higher than or equal to the preset value. In this example, the first fan 122 has first power P1 and the second fan 117 has second power P2, where a ratio of the first power P1 to the second power P2 is higher than or equal to 1 and lower than or equal to 10. The first fan 122 and the second fan 117 are configured to have a relatively high power ratio. Thus, the heat dissipation is performed only through the first fan 122 when the power unit 100 works normally, and the second fan 117 starts only when the temperature in the accommodation space 113 is too high, thereby preventing the second fan 117 from consuming excessive energy and ensuring that the first fan 122 can meet a basic heat dissipation requirement.

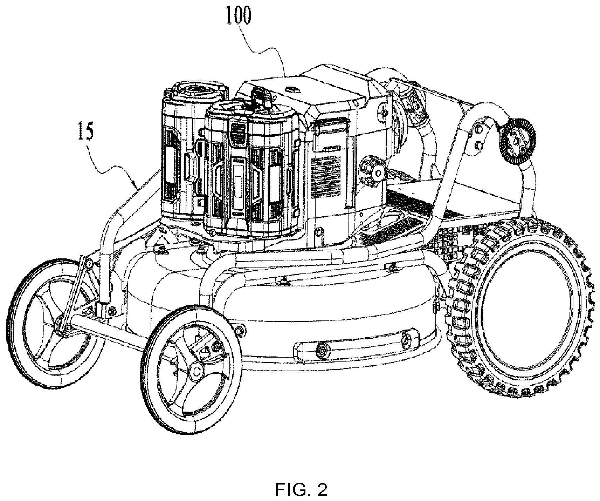

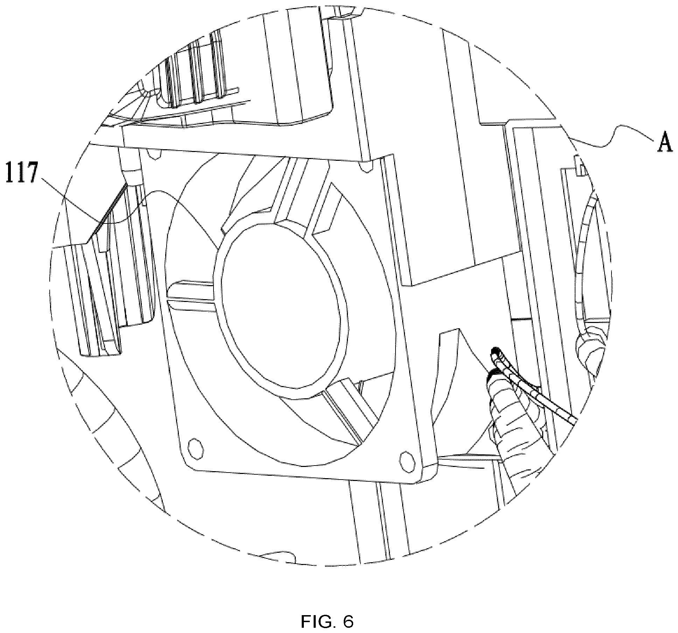

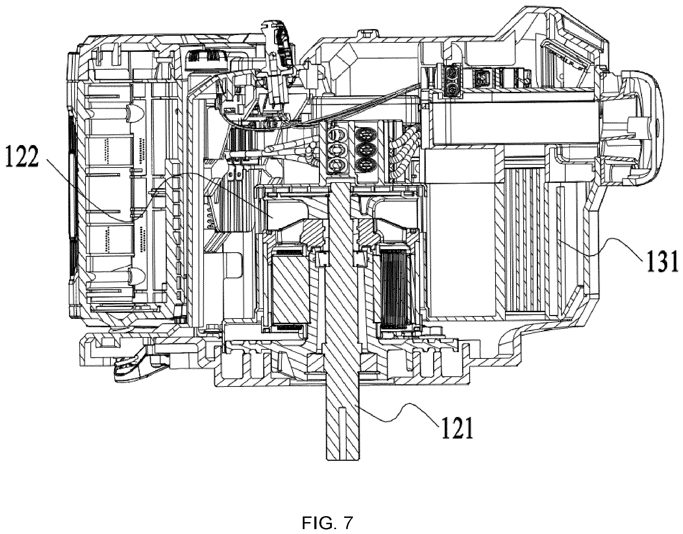

As shown in FIGS. 2 to 7, as an implementation manner, both the airflow inlet 111 and the airflow outlet 112 are disposed in positions on an upper side of the housing 11 and are away from the output end 121 of the motor 12. The mower is used as an example here. Relatively much debris and dust are generated when the output end 121 of the motor 12 drives blades to rotate to mow grass. Most of the debris and dust accumulate in positions on a lower side of the power unit 100. The airflow inlet 111 and the airflow outlet 112 are disposed in positions away from the output end 121 of the motor 12 such that the airflow inlet 111 and the airflow outlet 112 can be in a preferred environment to be away from the debris and dust. Thus, the heat dissipation airflow in the accommodation space 113 can keep relatively clean when flowing through the control assembly 13 and the motor 12, thereby avoiding the contamination of the control assembly 13 or the motor 12. Thus, the service life of the power unit 100 can be effectively prolonged. The airflow inlet 111 is further provided with a cavity. The cavity is provided with a baseplate and a passage, and the baseplate is oblique from top to bottom. When entering the cavity from the airflow inlet 111, the heat dissipation airflow needs to pass through the baseplate, then enters the passage, and finally enters the accommodation space 113. In this process, dust or granules in the heat dissipation airflow accumulate on the baseplate under the action of gravity when passing through the baseplate. Thus, the dust or granules can be prevented from entering the accommodation space 113. The cavity also has a storage function so that the debris in the cavity can be cleaned together when relatively much debris accumulates. A dustproof device such as a dust shield or a sponge may be further disposed at the airflow inlet 111 to increase the cleanliness of the heat dissipation airflow. The details are not repeated here.

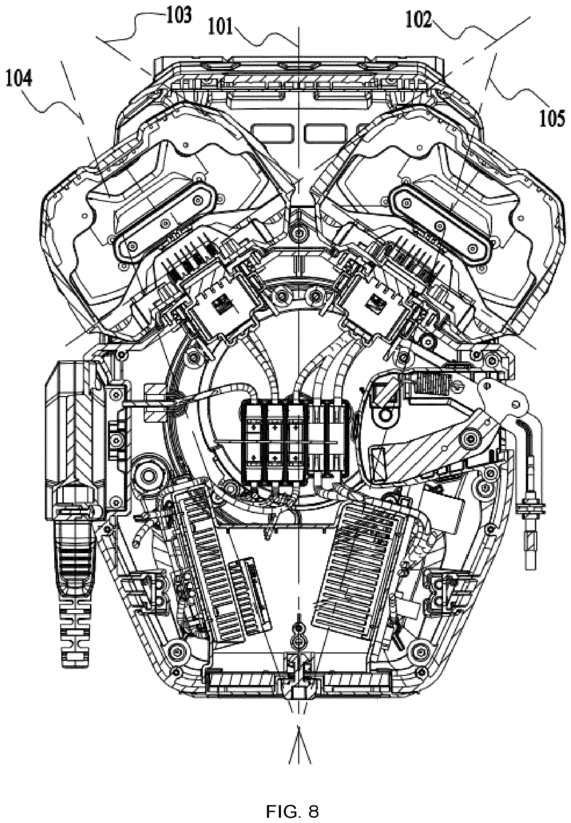

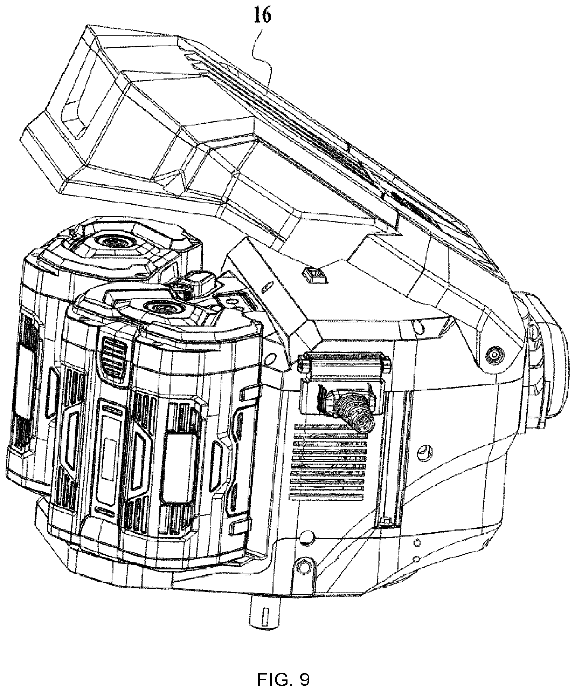

As shown in FIG. 1 and FIGS. 7 to 9, as an implementation manner, the power supply assembly 14 includes a first-type power supply 141 and a second-type power supply 142. The first-type power supply 141 is detachably connected to the housing 11 of the power unit 100 and disposed on a side surface of the housing 11. The second-type power supply 142 is assembled on the upper side of the power unit 100. In some examples, the side surface of the housing 11 is provided with the connection portion for mounting the first-type power supply 141, and the connection portion includes a connection surface extending along an up and down direction. In this example, the connection surface includes a first connection surface 102 and a second connection surface 103. The first connection surface 102 and the second connection surface 103 intersect with each other, and in a direction of a first plane 101 extending along a front and rear direction, the first connection surface 102 and the second connection surface 103 are further substantially symmetrical about the first plane 101. In addition, the first connection surface 102 obliquely intersects with the first plane 101, and the second connection surface 103 obliquely intersects with the first plane 101. The first connection surface 102 and the second connection surface 103 form a clamping region that intersects with the motor 12, where the motor 12 is at least partially disposed within the clamping region. In this example, the control assembly 13 includes a first control board 133 and a second control board 134. The first control board 133 extends substantially in a second plane 104, and the second control board 134 extends substantially in a third plane 105. The second plane 104 intersects with the first plane 101, and the third plane 105 intersects with the first plane. The second plane 104 and the third plane 105 are symmetrical about the first plane 101. In fact, the first control board 133 and the second control board 134 intersect with each other and are in a "V" shape. The first control board 133 and the second control board 134 are disposed in the preceding form so that the space within an included angle of the housing 11 can be fully utilized and the overall volume of the power unit 100 is reduced.

The housing 11 is further provided with a first-type interface (not shown in the figure), and the first-type interface can connect the first-type power supply 141. The power unit 100 has a cube shape as a whole. The connection surface is disposed at such a position to obliquely intersect with the first plane 101 so that the volume of the cube can be reduced, thereby saving a space. In fact, the first connection surface 102 and the second connection surface 103 both obliquely intersect with the first plane 101, which can sufficiently reduce the space occupied by the ridged portion of the power unit 100. The first connection surface 102 and the second connection surface are planes, thereby improving the reliability and stability with which the first-type power supply 141 is mounted onto the power unit 100. The first-type power supply 141 is a detachable battery pack. In fact, multiple connection surfaces may be provided so that more first-type power supplies 141 relatively small in volume can be connected. The first-type interface may be disposed in different positions of the connection portion to be adapted to connections to different battery packs. The first-type power supply 141 is not limited to a uniform size, and any battery pack that can output an effective current and has an effective interface can be mounted onto the connection surface. In a plane perpendicular to the front and rear direction, a projection of the first-type power supply 141 in the plane along the direction of the first plane 101 at least partially coincides with a projection of the motor 12 in the plane along the direction of the first plane 101.

A fixing member 16 for fixing the first-type power supply 141 is further disposed on the power unit 100. As an implementation manner, the fixing member 16 is in the form of a flip cover to cover at least part of the first-type power supply 141. For example, the fixing member 16 on the housing 11 is configured to rotate, in a position away from the first-type power supply 141, around a rotation shaft, where the fixing member 16 includes a locked state where the fixing member 16 covers the first-type power supply 141 and an unlocked state where the fixing member 16 is away from the first-type power supply 141. When the fixing member 16 is in the locked state, the first-type power supply 141 can be at least partially covered and effectively fixed on the housing 11. With this configuration, the battery pack is mostly exposed to the outside so that the battery pack can dissipate heat better.

The second-type power supply 142 is configured to have the structure of an integrated power supply. The second-type power supply 142 can be mounted on the upper side of the power unit 100 and is connected to the power unit 100 with a set of slide rails 142a. In some examples, the second-type power supply 142 may be mounted to or detached from the power unit 100 in the up and down direction, may be mounted to or detached from the power unit 100 in the left and right direction or the front and rear direction, or may be mounted to or detached from the power unit 100 by rotating around a rotation shaft. The power unit 100 is further provided with a second-type interface 116. The second-type interface 116 can connect the second-type power supply 142 so that the power unit 100 is powered. The first-type power supply 141 and the second-type power supply 142 are perpendicular to each other so that a space outside the housing 11 can be utilized to the maximum extent. In some examples, the first-type power supply 141 and the second-type power supply 142 may be connected in parallel and have various power supply modes. The first-type power supply 141 and the second-type power supply 142 may supply power synchronously. Alternatively, when the first-type power supply 141 is exhausted, the second-type power supply 142 supplies power alone. Alternatively, when the second-type power supply 142 is exhausted, the first-type power supply 141 supplies power alone. Alternatively, the first-type power supply 141 is replaced in real time so that the power unit 100 is powered. It is to be understood that since the first-type interface is disposed in different positions and can be adapted to different types of power supplies, the first-type interface has very good adaptability, and most types of battery packs on the market can be plugged into the first-type interface according to environments limited by working conditions. Thus, the endurance of the power unit 100 is improved, thereby ensuring that the power unit 100 works continuously.

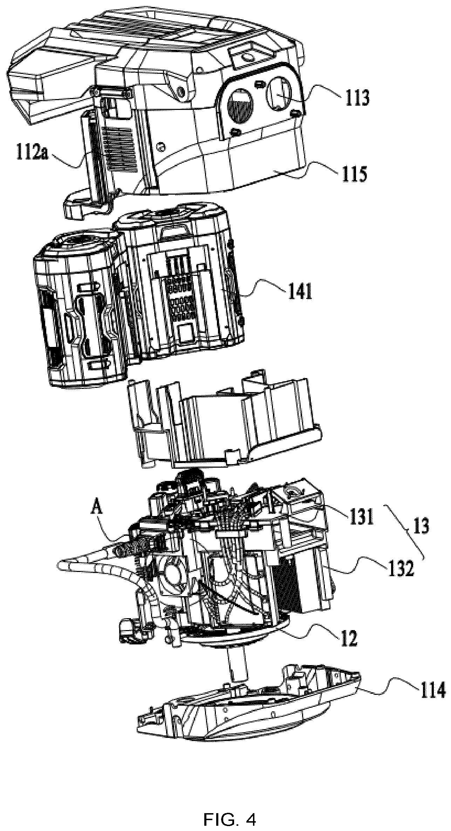

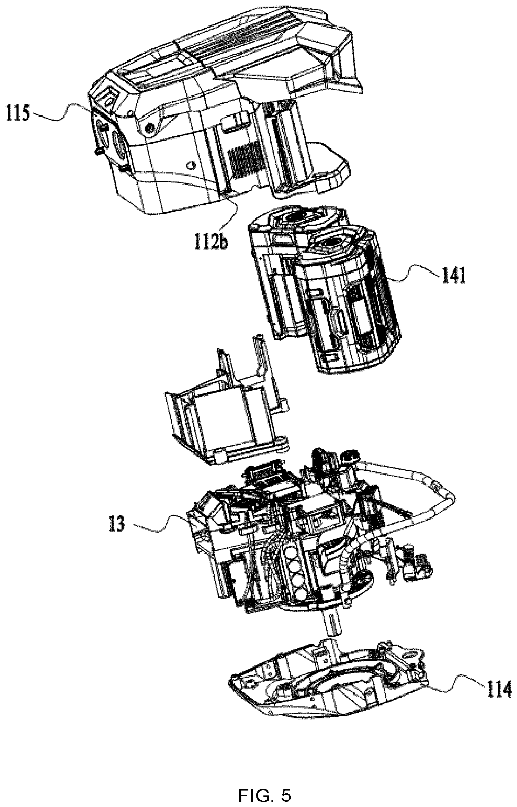

As shown in FIGS. 4 and 5, the housing 11 includes a first housing 114 and a second housing 115. The first housing 114 is a base of the power unit 100, and the second housing 115 is a main body for accommodating the motor 12 and the control assembly 13. The second housing 115 is disposed on an upper side of the first housing 114, and the first housing 114 further covers at least part of the second housing 115. Here, in fact, the preceding first connection surface 102 and the preceding second connection surface 103 are disposed on the second housing 115. The first housing 114 is made of a first-type material, and the second housing 115 is made of a second-type material. In this example, the control assembly 13 is also configured to be at least partially connected to the first housing 114 and can dissipate heat through the first housing 114. In some examples, thermal conductivity of a first material is higher than thermal conductivity of a second material. When the control assembly 13 is configured to be connected to the first housing 114, at least part of heat generated by the control assembly 13 in the working process can be transferred to the first housing 114 in the form of thermal conduction and dissipated out through the first housing 114. The connection between the control assembly 13 and the first housing 114 is not limited to a fixed connection, a detachable connection, or other connection manners in the conventional sense. The control assembly 13 is in contact with the first housing 114 or a distance between the control assembly 13 and the first housing 114 is less than a preset value such that the heat of the control assembly 13 can be radiated to the first housing 114 and dissipated out through the first housing 114, both of which may be regarded as the preceding connection between the control assembly 13 and the first housing 114. The first housing 114 is configured to have thermal conductivity higher than or equal to 80 W/(m*K) and can transmit out the heat from the control assembly 13 in a preferred state.

As an implementation manner, a tensile strength of the first-type material is greater than a tensile strength of the second-type material. In some examples, the tensile strength of the first-type material is configured to be greater than or equal to 225 MPa and less than or equal to 350 MPa, and the tensile strength of the second-type material is configured to be greater than or equal to 56 MPa and less than or equal to 215 MPa. Here, an outer surface of the power unit 100 has a surface area S1. After the first housing 114 is assembled to the power unit, an outer surface of the first housing 114 has a surface area S2. A ratio of the outer surface area S1 of the whole power unit 100 to the outer surface area S2 of the first housing 114 is higher than or equal to 1 and lower than or equal to 2. For example, the ratio of the outer surface area S1 of the whole power unit 100 to the outer surface area S2 of the first housing 114 is higher than or equal to 1.5 and lower than or equal to 2. With this configuration, on the one hand, metal materials can be saved, and on the other hand, the power unit 100 can have a sufficient strength and a metallic texture in appearance. In fact, the first housing 114 extends across the whole power unit 100 along the front and rear direction and extends across the whole power unit 100 along the left and right direction. Thus, the base of the whole power unit 100 is totally covered by the first housing 114 and at least partially extends along the up and down direction so that the strength of the whole base of the power unit 100 is ensured.

The first housing 114 is made of a metal material, and the second housing 115 is made of plastic. The combination of two materials, on the one hand, can ensure the strength of the base, and on the other hand, can reduce the weight of the whole power unit 100 so that the configuration of the power unit 100 is optimized. In addition, the first housing 114 has a first mass M1 and the second housing 115 has a second mass M2, where a ratio of the first mass to the second mass is higher than or equal to 3 and lower than or equal to 5.

In this example, the control assembly 13 of the power unit 100 is also assembled into a whole so as to be mounted onto the base. Before the power unit 100 is assembled, the circuit board 131, the heat sink 132, a motherboard, a power management board, and the like have been mounted into a whole. When the control assembly 13 needs to be assembled, the control assembly 13 is mounted as a whole into the accommodation space 113. Thus, in case of a failure, the control assembly 13 can be detached as a whole and repaired, thereby optimizing the maintainability of the power unit 100.

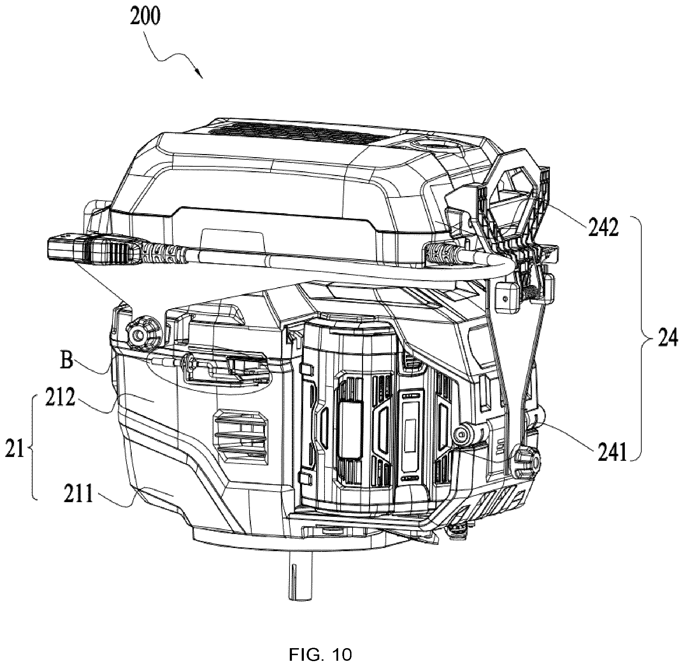

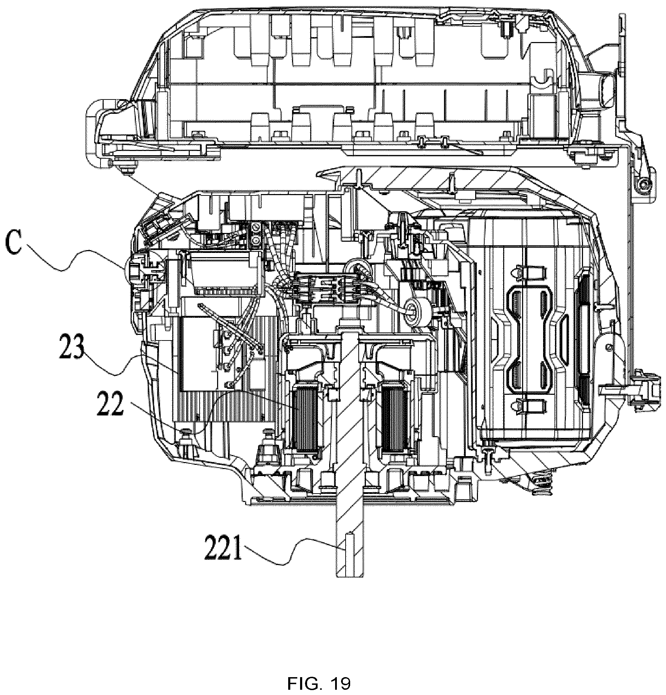

FIG.10 shows a power unit 200 in a second example. As shown in FIGS. 10 and 19, in this example, the power unit 200 may have a motor 22, a control assembly 23, and a power supply assembly 24 that have the same structures as those in the first example.

The parts of the first example that are compatible with this example may be applied to this example. Only the differences between this example and the first example are described below.

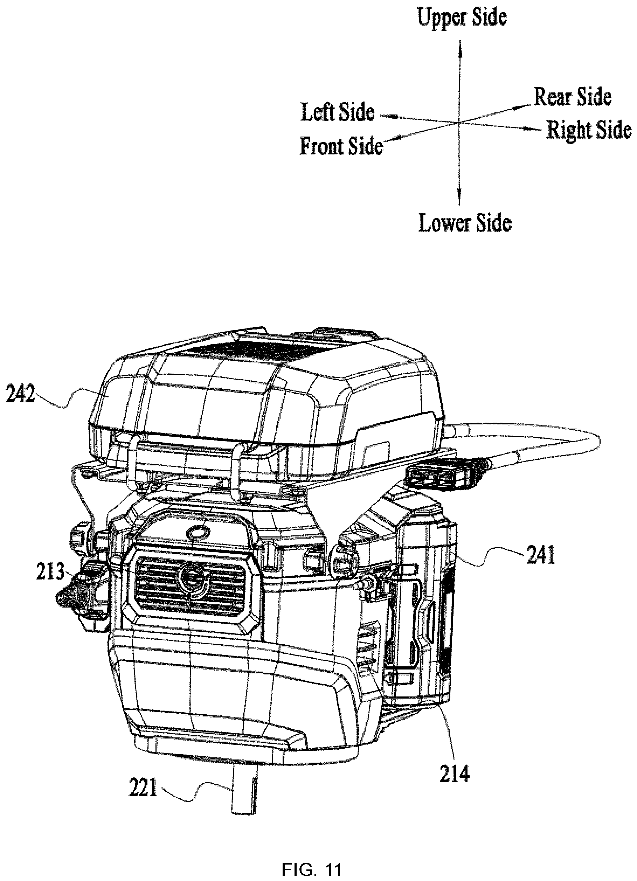

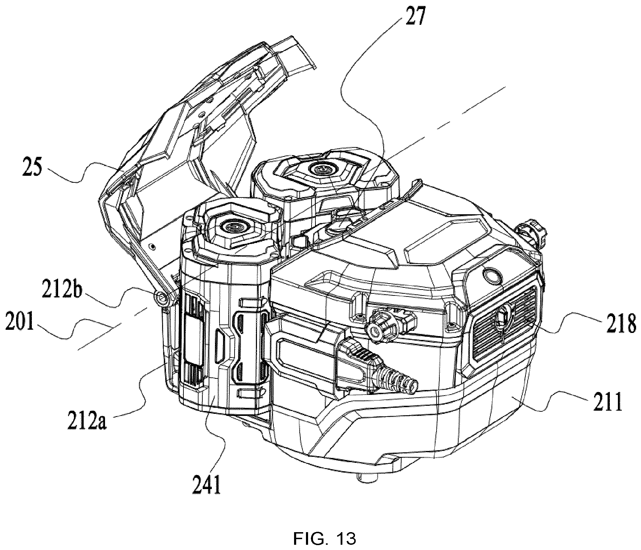

As shown in FIGS. 11 to 13, in this example, a housing 21 includes a first housing 211 and a second housing 212. The power supply assembly 24 includes a first-type power supply 241 and a second-type power supply 242. The first-type power supply 241 is further provided with a protective cover 25. The protective cover 25 is configured to be capable of rotating around a rotation shaft 212b. In some examples, the rotation shaft 212b is disposed on the second housing 212 and extends along a first straight line 201. The second housing 212 is further formed with or connected to an extension portion 212a for covering at least part of the first-type power supply 241. The rotation shaft 212b is connected to or formed on the extension portion 212a. To describe technical solutions of the present application clearly, a front side, a rear side, a left side, a right side, an upper side, and a lower side as shown in FIG. 11 are further defined. The first housing 211 at least partially covers a lower side and a rear side of the first-type power supply 241. The protective cover 25 at least partially covers an upper side and the rear side of the first-type power supply 241. That is, a whole constituted by the protective cover 25 and the extension portion 212a covers the rear side of the first-type power supply 241. In fact, the first housing 211 may not be formed with the extension portion 212a. That is, the protective cover 25 extends from bottom to top and can cover the entire rear side and the upper side of the first-type power supply 241. As for the manner in which the first housing 211 and the protective cover 25 are arranged, the details are not repeated here as long as the rear side of the first-type power supply 241 can be at least partially covered. In this example, the protective cover 25 includes a first cover body 251 and a second cover body 252. The first cover body 251 is made of a first material, the second cover body 252 is made of a second material, and the first cover body 251 is fixedly connected to the second cover body 252. In some examples, the first cover body 251 adopts a rubber member or a plastic member, and the second cover body 252 adopts a metal member, which is optionally stainless steel or aluminum alloy. The first cover body 251 and the second cover body 252 are connected to each other by a screw or a rivet and can be connected into a whole, that is, the first cover body 251 and the second cover body 252 are substantially identical in shape and appearance so that the first cover body 251 and the second cover body 252 can effectively fit each other. On the one hand, by arranging the protective cover 25 formed by the combination of two materials, the strength of the protective cover 25 can be increased. On the other hand, by arranging materials such as rubber parts or plastic parts, it is possible to increase the buffering effect between the protective cover 25 and a contact surface when the power unit 200 falls or collides. A connection assembly 219 for a connection to the protective cover 25 is further formed on the first housing 211. For example, the connection assembly 219 may be a snap-fit assembly 219 that the protective cover 25 can be snapped into, or the connection assembly 219 may be a magnetic member that can attract the second cover body 252. A buffer portion is further formed or connected around the connection assembly 219, thereby avoiding the generation of relatively loud noise when the protective cover 25 is connected to the connection assembly 219.

In this example, in fact, the power unit 200 includes three parts of the housing, that is, the first housing 211, the second housing 212, and the protective cover 25. The power unit 200 is designed in the preceding manner so that the power unit 200 is configured to have multiple sections, that is, based on the first housing 211 as a base, the second housing 212 as a main body, and the protective cover 25, various parts of the power unit 200 are optimized in structure, that is, the requirement of the base for strength, the requirement of the main body for a shape, and the requirements of the protective cover 25 for a position and a connection manner are satisfied. In addition, the modular production and assembly of the power unit 200 are also facilitated, simplifying production and assembly manners.

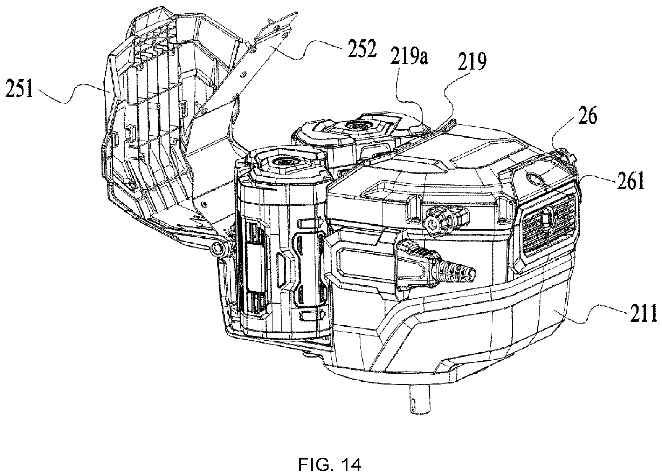

As shown in FIG. 14, in a direction of a straight line extending along an up and down direction, a projection of the power unit 200 in a plane perpendicular to the straight line along the direction of the straight line is substantially polygonal and substantially symmetrical about a plane of symmetry or a line of symmetry. The projection of the power unit 200 in the preceding plane may have a regular shape or an irregular shape that tends to be a regular shape, which generally satisfies assembly requirements. With the preceding configuration, the weight of the power unit 200 can be made uniform, which facilitates production and assembly.

As shown in FIG. 11, in this example, the power unit 200 further includes a first switch 26 for controlling the power supply assembly 24 to be powered on or off. An indicator light 261 for showing a current state of the power supply assembly 24 is further disposed around the first switch 26. The indicator light 261 may also be disposed in another position relative to the first switch 26, for example, the indicator light 261 is symmetrical about the first switch 26, the indicator light 261 is disposed on a side of the first switch 26, or the indicator light 261 is disposed away from the first switch 26 as long as the indicator light 261 can be within a user's visual range when the first switch 26 is triggered so as to power the power supply assembly 24. In fact, the first switch 26 may also be disposed on an outer surface of the first housing 211 where the first switch 26 can be triggered, and the first switch 26 is within the visual range. The indicator light 261 may be part of the first switch 26 or the indicator light 261 and the first switch 26 may be regarded as two parts separated from each other as long as the indicator light 261 can show the state of the power supply assembly 24 when the first switch 26 is triggered.

In an example, the indicator light 261 can show light of different colors or light of different shapes according to the current state of the power supply assembly 24. As an implementation manner, the indicator light 261 is arranged around the first switch 26 and is annular in shape. Thus, when the first switch 26 is triggered, the indicator light 261 arranged around the first switch 26 can clearly reflect the current state of the power supply assembly 24. In practice, the power supply assembly 24 generally includes working states such as "over-temperature", "low-voltage", "overload", and "normal". The user needs to perform different operations separately according to the preceding states so as to respond to the current power supply assembly 24 so that the power supply assembly 24 is prevented from being damaged. Therefore, the indicator light 261 is provided so that the user can be reminded in time to respond to the current state of the power supply assembly 24, thereby preventing the service life of the power unit 200 from being affected by the damage to the power supply assembly 24 or a circuit. For example, the indicator light 261 is electrically connected to the power supply assembly 24, and the first switch 26 is also electrically connected to the power supply assembly 24. A power management board (not shown in the figure) is further connected between the indicator light 261 and the power supply assembly 24, that is, the power management board is electrically connected to the indicator light 261 and the power supply assembly 24. In addition, the power management board is also electrically connected to the first switch 26. When the first switch 26 is triggered so as to power the power supply assembly 24, the power management board collects current state information of the power supply assembly 24 and transmits the state information to the indicator light 261, and the indicator light 261 reflects the light of different colors or the light of different shapes according to the state information. In this example, the indicator light 261 is further configured to be capable of showing bright light of different colors and to be also capable of flickering at different frequencies when the power supply assembly 24 is in different states. When the power supply assembly 24 is in the "over-temperature" state, the indicator light 261 shows yellow light and is constantly on; when the power supply assembly 24 is in the "low-voltage" state, the indicator light 261 shows red light and flickers; when the power supply assembly 24 is in the "overload" state, the indicator light 261 shows yellow light and flickers; and when the power supply assembly 24 is in the "normal" state, the indicator light 261 shows green light and is constantly on.

In this example, the power unit 200 further includes a second switch 27, and the second switch 27 is configured to adjust a rotational speed of the motor 22. The second switch 27 is also disposed on the outer surface of the housing 21 where the second switch 27 can be triggered. In some examples, the second switch 27 is disposed on an upper surface of the second housing 212, has a shape of a knob, and is rotatable to adjust the rotational speed of the motor 22.

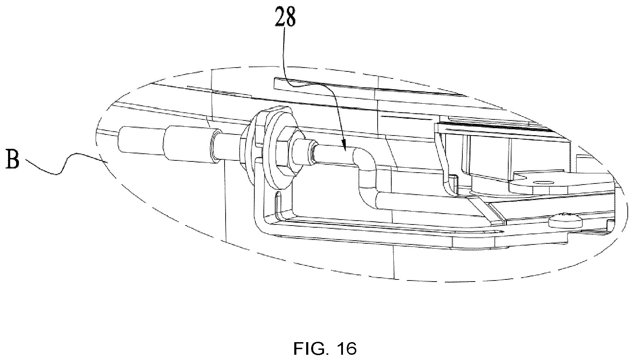

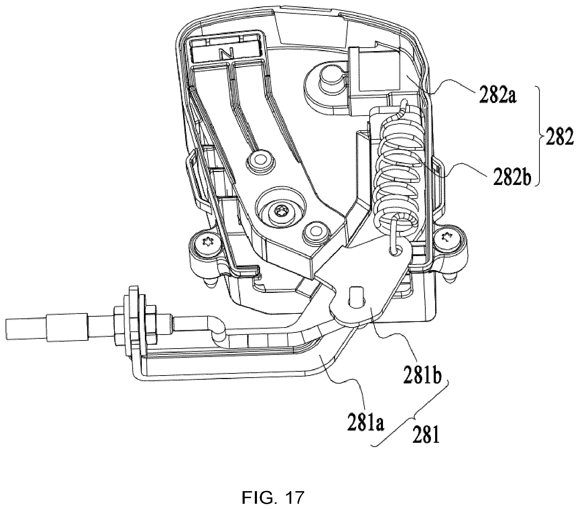

As shown in FIGS. 10, 16, and 17, the power unit 200 is further provided with a third switch 28, and the third switch 28 is configured to start the motor 22. The third switch 28 includes an operation assembly 281 operable and a trigger member 282 capable of being triggered. The operation assembly 281 can be operated by the user to trigger the trigger member 282. In some examples, the operation assembly 281 includes an operation member 281a and a rotary member 281b, and the trigger member 282 includes a trigger portion 282a and an elastic portion 282b. The operation member 281a is connected to the rotary member 281b and can control the rotary member 281b to rotate about a rotation shaft. The rotary member 281b has a first position where the trigger member 282 is triggered or the rotary member 281b is close to the trigger member 282 and a second position where the rotary member 281b is away from the trigger member 282. When the rotary member 281b is in the first position, the trigger portion 282a is not triggered and the motor 22 is in an off state. When the rotary member 281b is in the second position, the trigger portion 282a is triggered, and in this case, the motor 22 is energized and starts to run. In some examples, the trigger portion 282a is a Hall element, and a magnetic member mating with the Hall element is disposed on the rotary member 281b. When the magnetic member is in contact with the Hall element, a power supply circuit of the motor 22 is turned on, and in this case, the motor 22 starts to run. It is to be understood that the trigger portion 282a may also be another form of switch as long as the power supply circuit of the motor 22 is turned on when the trigger portion 282a is triggered. The details are not repeated here. In some examples, one end of an elastic member is connected to the rotary member 281b, the other end of the elastic member is connected to a connection terminal close to the trigger portion 282a, and the elastic member has a preload force between the rotary member 281b and the operation member 281a. Here, when the operation member 281a is operated such that the rotary member 281b moves from the first position to the second position, an elastic force of the elastic member needs to be overcome. When the operation member 281a is released, the rotary member 281b return to the first position under the action of the elastic force of the elastic member. The operation member 281a may be configured to be directly connected to the rotary member 281b by a cable so as to facilitate remote operation, or the operation member 281a may be configured to be controlled by an electronic control unit to move as long as the operation member 281a can extend to a preset position and is operable. The details are not repeated here.

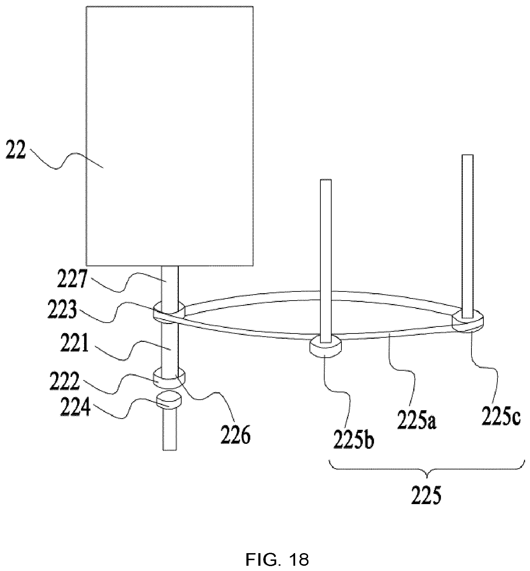

As shown in FIG.18, in this example, the motor 22 includes a motor shaft 221. The motor shaft 221 includes a first drive portion 222 and a second drive portion 223 that are capable of outputting multiple sets of power. That is, when the power unit 200 is connected to an execution device 30, the power unit 200 can output the multiple sets of power so as to satisfy the requirements of the execution device 30 for different power. Here, a mower is used as an example. A hand-propelled mower generally needs to have a mowing function and a self-moving function that are two different functions and needs to be driven by two different forms of power. The first drive portion 222 may be connected to a first transmission portion 224 to output a first transmission force, and the second drive portion 223 may be connected to a second transmission portion 225 to output a second transmission force. As an implementation manner, a mowing mechanism may also be directly connected to the first drive portion 222, and a self-moving mechanism needs to be connected to the second drive portion 223 by a transmission mechanism. As an implementation manner, the motor shaft 221 includes a first end 226 and a second end 227. The first drive portion 222 is disposed at the first end 226, where the first drive portion 222 is configured to be fixedly connected to the motor shaft 221 and connectable to the first transmission portion 224 so as to directly transmit a drive force of the motor shaft 221 to a mowing element. The second drive portion 223 is disposed between the first end 226 and the second end 227, where the second drive portion 223 is configured to mate with the second transmission portion 225 so as to change a running form of the second drive portion 223. In some examples, the first drive portion 222 is configured to be an external thread structure that can fix the first transmission portion 224, and the first transmission portion 224 is configured to be an internal thread structure connectable to the first drive portion 222. Here, for the first transmission portion 224, the first transmission portion 224 may not be provided when the first drive portion 222 is used for directly driving a working accessory. In other words, even if the first drive portion 222 directly drives the working accessory, a connection member for connecting the working accessory to the first drive portion 222 may also be regarded as the first transmission portion 224. The second drive portion 223 is configured to be a gear structure or a pulley structure that can transmit power, which is not limited here. The second transmission portion 225 includes a transmission belt 225a, a flywheel 225b, and an output end 225c. The transmission belt 225a connects the second drive portion 223 to the output end 225c and can transmit power from the second drive portion 223 to the output end 225c. The flywheel 225b adjusts the transmission efficiency of the transmission belt 225a by compressing or loosening the transmission belt 225a. In some examples, when the flywheel 225b compresses the transmission belt 225a, the transmission belt 225a can mate with the second drive portion 223 more closely so that more power can be transmitted to the output end 225c; and when the flywheel 225b loosens the transmission belt 225a, the transmission belt 225a can transmit less power to the output end 225c.

In an example, the first drive portion 222 and the second drive portion 223 may also be configured to be separate drive portions, that is, the first drive portion 222 and the second drive portion 223 coincide with each other. In this case, the first transmission portion 224 and the second transmission portion 225 are both connected to the first drive portion 222 or the second drive portion 223. Only the first drive portion 222 or the second drive portion 223 may also be provided. In this case, the first transmission portion 224 and the second transmission portion 225 are also both connected to the first drive portion 222 or the second drive portion 223. The first transmission portion 224 may also be configured to at least partially coincide with the second transmission portion 225 such that the first transmission portion 224 and the second transmission portion 225 can be both connected to the first drive portion 222 or the second drive portion 223. Even if the first transmission portion 224 and the second transmission portion 225 at least partially coincide with each other, the first transmission portion 224 and the second transmission portion 225 can output two forms of transmission forces without interference therebetween.

With the preceding configuration, the motor 22 can output different forms of power and can distribute power properly, which simplifies the structure of the power unit 200 and diversifies the functions of the power unit 200. In addition, the execution device 30 that can output multiple functions has the power unit 200 with the diversified functions, which also satisfies the output of the functions of the execution device 30 and avoids the mounting of other power elements. The power unit 200 may also be configured to output only one type of power so that the power unit 200 can be adapted to different types of execution devices 30, which improves the adaptability of the power unit 200.

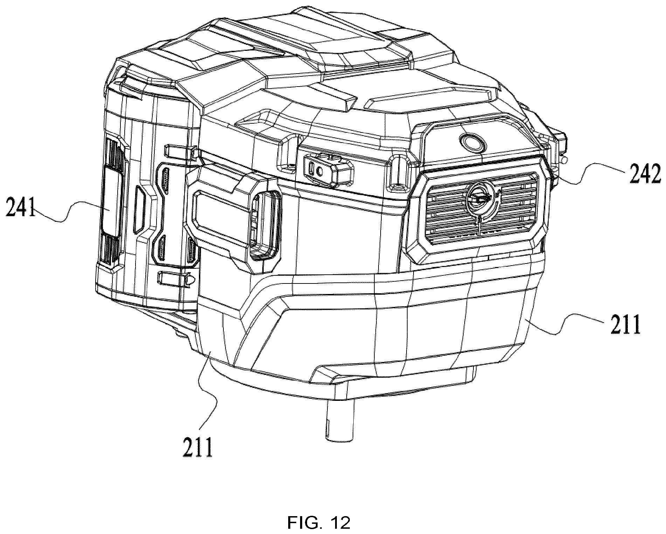

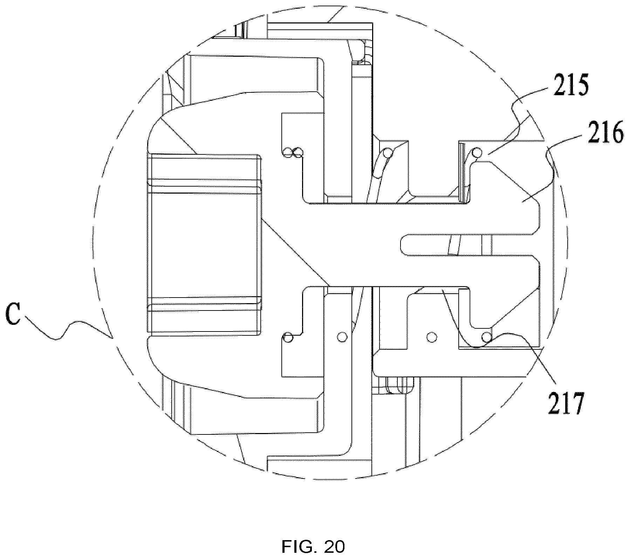

As shown in FIGS. 12, 19, and 20, the power unit 200 further includes an air inlet screen 218 disposed at an air inlet 213 or an air outlet 214. The air inlet screen 218 has a quick-release structure and thus is convenient to replace or clean. In some examples, the air inlet 213 and the air outlet 214 are disposed in positions of the housing 21 away from the motor shaft 221, that is, upper positions on side surfaces of the housing 21. With this configuration, the air inlet 213 or the air outlet 214 can be away from the working accessory connected to the motor shaft 221, thereby preventing debris or dust generated in a working process of the working accessory from entering the air inlet 213 or the air outlet 214. In addition, a stop slot 215 is disposed on an inner side of the housing 21, and the air inlet screen 218 is mounted onto or detached from the housing 21 through a stop pin 216 mating with the stop slot 215. In some examples, a flat hole 217 through which the stop pin 216 can pass is formed on the housing 21, and the stop pin 216 is formed with a stop portion. When the stop pin 216 passes through the flat hole 217 at a first angle, the stop portion is parallel to the flat hole 217 so that the stop portion can pass through the flat hole 217. When the stop pin 216 rotates to a second angle, the stop portion is perpendicular to the flat hole 217 and fails to pass through the flat hole 217 so that the air inlet screen 218 can be limited.

Typically, the power unit 200 as an external power unit includes the integration of power output, energy supply, control, and the like. To satisfy requirements of working conditions, some execution devices 30 need to output relatively high power and be able to maintain a relatively long time of endurance, and need to be convenient for the user to operate and control. A power unit 200 disclosed in the related art fails to satisfy the preceding requirements simultaneously. In fact, to satisfy the requirement for the relatively long time of endurance, some power units 200 fail to satisfy the requirement for high power. However, some power units 200 that can output relatively high power fail to satisfy the requirements on endurance and heat dissipation, so the power units 200 can keep outputting relatively high power for a very short time and fail to satisfy actual requirements of the execution device 30. Table 1 shows the relationship between maximum output power, a weight, and a power-to-weight ratio of the power unit 200.

**Table 1**

| No. | Maximum Output Power (W) | Weight (kg) | Power -to-Weight Ratio (W/kg) | Type |
|---|---|---|---|---|
| 1 | 1800 | 5.75 | 313.04 | Brushed |
| 2 | 1526 | 8.56 | 178.27 | Brushed |
| 3 | 2146 | 8.58 | 250.12 | Brushed |
| 4 | 2118 | 4.26 | 497.18 | Brushless |
| 5 | 2118 | 4.01 | 528.18 | Brushless |
| 6 | 1466 | 3.99 | 367.42 | Brushless |
| 7 | 2875 | 4.26 | 674.88 | Brushless |
| 8 | 3337 | 5.35 | 623.74 | Brushless |
| 9 | 2875 | 4.04 | 711.63 | Brushless |
| 10 | 1186 | 3.68 | 322.28 | Brushless |
| 11 | 1396 | 3.89 | 358.87 | Brushless |
| 12 | 6000 | 10.96 | 547.45 | Brushless |

In this example, the maximum output power P of the motor 22 is configured to be greater than or equal to 1500 W and less than or equal to 5500 W. Before the power supply assembly 24 is mounted to the power unit 200, a mass M1 of the whole power unit 200 is greater than or equal to 8 kg and less than or equal to 14.5 kg. A ratio of the maximum output power P to the mass M1 of the whole power unit 200 is higher than or equal to 103.5 W/kg and lower than or equal to 687.5 W/kg. When the ratio of the maximum output power P to the mass M1 of the whole power unit 200 is higher than or equal to 120 W/kg and lower than or equal to 500 W/kg, the whole system of the power unit 200 has a capability of continuously outputting optimal high power and can have a longer service life.

In this example, the mass of the power unit 200 tends to be greater than or equal to 10 kg and less than or equal to 12 kg, and the maximum output power of the motor 22 tends to be greater than or equal to 2000 W and less than or equal to 4000 W. The power supply assembly 24 has a preset mass M2 that is configured to be greater than or equal to 1.3 kg and less than or equal to 8 kg. The power supply assembly 24 includes the first-type power supply 241 and the second-type power supply 242. The power unit 200 has a function with which the first-type power supply 241 or the second-type power supply 242 can be mounted to the power unit 200 and the power unit 200 works normally, or the power unit 200 has a function with which the first-type power supply 241 and the second-type power supply 242 can both be mounted to the power unit 200 and the power unit 200 works normally. Thus, after the power supply assembly 24 is mounted, the power unit 200 has a weight greater than or equal to 9.3 kg and less than or equal to 22.5 kg.

In this example, the power unit 200 is mounted to the execution device 30 to output power. To be adapted to the power unit 200 and prevent the whole system from failing to run normally when the power unit 200 is mounted to the execution device 30, the execution device 30 has a mass M3, and a ratio of the mass M1 of the power unit 200 to the mass M3 of the execution device 30 is configured to be higher than or equal to 0.25 and lower than or equal to 0.46, thereby ensuring that the whole system has relatively high stability and can output power continuously and reliably when the power unit 200 is mounted to the execution device 30. When the ratio of the mass M1 of the power unit 200 to the mass M3 of the execution device 30 is higher than or equal to 0.3 and lower than or equal to 0.4, the whole system has higher stability and can output power more continuously and reliably when the power unit 200 is mounted to the execution device 30.

In this example, a cutting accessory is connected to the motor shaft 221. The cutting accessory can be driven by the motor shaft 221 and is rotatable around the motor shaft 221. The cutting accessory has a rotation radius R, where the rotation radius is greater than or equal to 200 mm and less than or equal to 325 mm. A product of the maximum output power P of the motor 22 and the rotation radius R is greater than or equal to 300 KW.mm and less than or equal to 1788 KW.mm.

In addition, with the preceding configuration, when the power unit 200 is mounted to the execution device 30, the whole has a more concentrated center of gravity and higher stability. In fact, the power unit 200 is substantially symmetrical about a first plane. When the power unit 200 is mounted to the execution device 30, here the mower is used as an example, and the mower has walking assemblies 29, a main body, and a handle. When the power unit 200 is mounted to the main body, a distance between the first plane and a left edge of the main body along a left and right direction perpendicular to the first plane is greater than or equal to 80 mm and less than or equal to 150 mm, and a distance between the power unit 200 and a right edge of the main body along the left and right direction perpendicular to the first plane is greater than or equal to 80 mm and less than or equal to 150 mm. With this configuration, the power unit 200 can be mounted in a preset position of the main body, and after the power unit 200 is combined with the main body, it is ensured that the center of gravity of the power unit 200 tends to coincide with the center of gravity of the main body, or the center of gravity of a combination of the power unit 200 and the main body is between the walking assemblies 29, thereby ensuring that the combination of the power unit 200 and the main body is more steady in a running process. In an example, the power unit 200 has a first center of gravity P1, and the execution device 30 has a second center of gravity P2, where a distance between the first center of gravity P1 and the second center of gravity P2 along a direction in which the execution device 30 moves forward is greater than or equal to 0 mm and less than or equal to 335 mm. In some examples, the distance between the first center of gravity P1 and the second center of gravity P2 along the direction in which the execution device 30 moves forward is greater than or equal to 0 mm and less than or equal to 200 mm. After the power unit 200 is connected to the execution device 30, the distance between the center of gravity of the power unit 200 and the center of gravity of the execution device 30 is configured to be within the preceding size range, which can ensure that the center of gravity of the whole execution device 30 is centered in a travelling process of the execution device 30, and the execution device 30 has a stable running condition and does not overturn when crossing a pit or a slope. In addition, the power unit 200 includes the first plane extending substantially along a front and rear direction, and the power unit 200 is substantially symmetrical about the first plane. A distance between the first center of gravity P1 and the first plane along the left and right direction perpendicular to the first plane 101 is greater than or equal to 0 mm and less than or equal to 80 mm. The execution device 30 is substantially symmetrical about the first plane, and a distance between the second center of gravity P2 and the first plane along the left and right direction perpendicular to the first plane is greater than or equal to 0 mm and less than or equal to 100 mm.

In addition, the walking assemblies 29 include a first walking assembly 291 and a second walking assembly 292. The first walking assembly 291 is disposed on a front side in the direction in which the mower moves forward, and the second walking assembly 292 is disposed on a rear side in the direction in which the execution device 30 moves forward. The first walking assembly 291 has a first rotation axis 202, and the second walking assembly 292 has a second rotation axis 203. When the power unit 200 is mounted to the main body, a distance between the first center of gravity of the power unit 200 and the first rotation axis 202 along the direction in which the execution device 30 moves forward is greater than or equal to 74 mm and less than or equal to 465 mm. A distance between the second center of gravity of the execution device 30 and the second rotation axis 203 along the direction in which the execution device 30 moves forward is greater than or equal to 0 mm and less than or equal to 200 mm. With this configuration, after the power unit 200 is mounted to the execution device 30, the stability of a combination of the power unit 200 and the execution device 30 in the travelling process can be improved.

## Claims

1. A power unit, which is configured to be connected to a garden or outdoor power execution device, comprising:
a housing formed with an accommodation space;
a motor at least partially disposed in the accommodation space;
a power supply assembly for powering the motor and at least partially disposed on the housing; and
a control assembly for controlling the motor;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and
the housing comprises a connection surface for a connection to at least part of the power supply assembly, and the connection surface is configured to obliquely intersect with a preset plane extending along a front and rear direction.

2. The power unit according to claim 1, wherein the power supply assembly comprises a first-type power supply and a second-type power supply, wherein the first-type power supply is disposed on the connection surface, and the second-type power supply is disposed at an upper end of the housing.

3. The power unit according to claim 2, wherein the first-type power supply and the second-type power supply are perpendicular to each other.

4. The power unit according to claim 1, wherein the housing comprises a first-type interface and a second-type interface, wherein the first-type interface is used for a connection to a first-type power supply, and the second-type interface is used for a connection to a second-type power supply.

5. The power unit according to claim 1, wherein the connection surface comprises a first connection surface and a second connection surface, wherein the first connection surface and the second connection surface are further symmetrical about the preset plane and form a clamping region that intersects with the motor.

6. The power unit according to claim 5, wherein the motor is at least partially disposed within the clamping region.

7. The power unit according to claim 2, wherein in a plane perpendicular to the front and rear direction, a projection of the motor in the plane along the front and rear direction at least partially coincides with a projection of the first-type power supply in the plane along the front and rear direction.

8. A power unit, which is configured to be connected to a garden or outdoor power execution device, comprising:
a housing formed with an accommodation space;
a motor at least partially disposed in the accommodation space;
a control assembly for controlling the motor; and
a power supply assembly for powering the motor;
wherein maximum power P of the motor is greater than or equal to 550 W and less than or equal to 3000 W; the power supply assembly comprises a first-type power supply or a second-type power supply, wherein the first-type power supply comprises at least one battery pack; and the housing is provided with a connection portion connected to the first-type power supply, and the second-type power supply is an integrated power supply.

9. The power unit according to claim 8, wherein
the housing comprises a first housing as a base and a second housing as a main body,
wherein the second housing is disposed on an upper side of the first housing.

10. The power unit according to claim 9, wherein
the first housing covers at least part of the second housing.

11. A power unit, which is configured to be connected to a garden or outdoor power execution device, comprising:
a housing formed with an accommodation space;
a motor at least partially disposed in the accommodation space; and
a control assembly for controlling the motor;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg.

12. The power unit according to claim 11, wherein
the ratio of the maximum output power P to the mass M1 is higher than or equal to 120 W/kg and lower than or equal to 500 W/kg.

13. The power unit according to claim 11, wherein
the mass M1 of the power unit is greater than or equal to 10 kg and less than or equal to 12 kg.

14. The power unit according to claim 11, wherein
the maximum output power P of the motor is greater than or equal to 2000 W and less than or equal to 4000 W.

15. The power unit according to claim 11, wherein
the motor is provided with a motor shaft, wherein the motor shaft is connected to a cutting accessory and capable of driving the cutting accessory to rotate; and the cutting accessory rotates around the motor shaft and has a rotation radius R, wherein the rotation radius R is greater than or equal to 200 mm and less than or equal to 325 mm, and a product of the maximum output power P of the motor and the rotation radius R is greater than or equal to 300 KW·mm and less than or equal to 1787.5 KW.mm.

16. The power unit according to claim 11, wherein
a weight M2 of a power supply assembly is greater than or equal to 1.3 kg and less than or equal to 8 kg.

17. The power unit according to claim 11, wherein
a weight of the power unit connected with a power supply assembly is greater than or equal to 9.3 kg and less than or equal to 22.5 kg.

18. The power unit according to claim 11, wherein
the power unit has a first center of gravity P1, and the execution device has a second center of gravity P2, wherein a distance between the first center of gravity P1 and the second center of gravity P2 along a direction in which the execution device moves forward is greater than or equal to 0 mm and less than or equal to 335 mm.

19. The power unit according to claim 18, wherein
the distance between the first center of gravity P1 and the second center of gravity P2 along the direction in which the execution device moves forward is greater than or equal to 0 mm and less than or equal to 200 mm.

20. The power unit according to claim 18, further comprising a power supply assembly, wherein the power supply assembly is at least partially disposed on a front side of a power head along the direction in which the execution device moves forward.

21. The power unit according to claim 18, further comprising a power supply assembly, wherein the power supply assembly comprises a first-type power supply and a second-type power supply, the first-type power supply is at least partially disposed on a front side of a power head along the direction in which the execution device moves forward, and the second-type power supply is disposed on an upper side of the power head.

22. The power unit according to claim 18, wherein
the power unit comprises a first plane extending substantially along a front and rear direction, the power unit is substantially symmetrical about the first plane, and a distance between the first center of gravity and the first plane along a left and right direction perpendicular to the first plane is greater than or equal to 0 mm and less than or equal to 80 mm.

23. The power unit according to claim 18, wherein
the power unit comprises a first plane extending substantially along a front and rear direction, the execution device is substantially symmetrical about the first plane, and a distance between the second center of gravity and the first plane along a left and right direction perpendicular to the first plane is greater than or equal to 0 mm and less than or equal to 100 mm.

24. The power unit according to claim 18, wherein
the power unit comprises a first plane extending substantially along a front and rear direction, the power unit is substantially symmetrical about the first plane, and a distance between the first plane and a left side of the execution device along a left and right direction perpendicular to the first plane is greater than or equal to 80 mm and less than or equal to 150 mm.

25. The power unit according to claim 18, wherein
the power unit comprises a first plane extending substantially along a front and rear direction, the power unit is substantially symmetrical about the first plane, and a distance between the first plane and a right side of the execution device along a left and right direction perpendicular to the first plane is greater than or equal to 80 mm and less than or equal to 150 mm.

26. The power unit according to claim 18, wherein
the execution device comprises a first walking assembly and a second walking assembly, wherein the first walking assembly is disposed on a front side of the second walking assembly, the first walking assembly has a first rotation axis, the second walking assembly has a second rotation axis, and a distance between the first center of gravity and the first rotation axis along a direction in which the execution device moves forward is greater than or equal to 74 mm and less than or equal to 465 mm.

27. The power unit according to claim 18, wherein
the execution device comprises a first walking assembly and a second walking assembly, wherein the first walking assembly is disposed on a front side of the second walking assembly, the first walking assembly has a first rotation axis, the second walking assembly has a second rotation axis, and a distance between the second center of gravity and the second rotation axis along a direction in which the execution device moves forward is greater than or equal to 0 mm and less than or equal to 200 mm.

28. The power unit according to claim 11, wherein
the housing comprises a first housing made of a first-type material and a second housing made of a second-type material, wherein the first housing is a base, the second housing is a main body, and a tensile strength of the first-type material is greater than a tensile strength of the second-type material.

29. The power unit according to claim 28, wherein
the first housing is made of a metal material, and the second-type material is made of a plastic material.

30. The power unit according to claim 28, wherein
an outer surface of the housing has a first surface area S1, the first housing has a second surface area S2 after the first housing is mounted to the power unit, and a ratio of the first surface area S1 to the second surface area S2 is higher than or equal to 1.5 and lower than or equal to 2.

31. The power unit according to claim 28, wherein
the tensile strength of the first-type material is greater than or equal to 225 MPa and less than or equal to 350 MPa.

32. The power unit according to claim 28, wherein
the tensile strength of the second-type material is greater than or equal to 56 MPa and less than or equal to 215 MPa.

33. The power unit according to claim 28, wherein
the first housing has a first mass M1 and the second housing has a second mass M2, wherein a ratio of the first mass M1 to the second mass M2 is higher than or equal to 3 and lower than or equal to 5.

34. The power unit according to claim 28, wherein
the first housing extends across the power unit along a front and rear direction and at least partially extends along an up and down direction.

35. The power unit according to claim 28, wherein
the second housing is provided, along an up and down direction, with a connection portion connected to the first housing.

36. The power unit according to claim 28, wherein
the second housing is disposed on an upper side of the first housing, and the first housing covers at least part of the second housing.

37. The power unit according to claim 28, wherein
thermal conductivity of the first housing is higher than thermal conductivity of the second housing.

38. A power unit system, comprising:
a power unit; and
an execution device connectable to the power unit;
wherein the power unit comprises:
a housing formed with an accommodation space;
a motor disposed in the accommodation space; and
a control assembly for controlling the motor;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg.

39. The power unit according to claim 38, wherein
the execution device has a mass M3, and a ratio of the mass M1 of the power unit to the mass M3 of the execution device is higher than or equal to 0.25 and lower than or equal to 0.46.

40. The power unit according to claim 38, wherein
the execution device has a mass M3, and a ratio of the mass M1 of the power unit to the mass M3 of the execution device is higher than or equal to 0.3 and lower than or equal to 0.4.

41. A power unit, which is configured to be connected to a garden or outdoor power execution device, comprising:
a housing formed with an accommodation space;
a motor at least partially disposed in the accommodation space; and
a power supply assembly for powering the motor and at least partially disposed on the housing;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and
the power unit further comprises a first switch for controlling the motor to start, wherein the first switch is a non-contact switch and comprises an operation portion that is operable and a trigger member capable of being triggered, and the trigger member is configured to turn on a power supply circuit of the motor.

42. The power unit according to claim 41, wherein
an operation assembly comprises an operation member and a rotary member, the trigger member comprises a trigger portion, and the operation member is connected to the rotary member and capable of controlling the rotary member to rotate around a rotation shaft so as to trigger the trigger portion.

43. The power unit according to claim 42, wherein
the rotary member comprises a first position and a second position, wherein the rotary member is close to the trigger portion and the trigger portion is triggered when the rotary member is in the first position, and the rotary member is away from the trigger portion and the trigger portion is not triggered when the rotary member is in the second position.

44. The power unit according to claim 42, wherein
the trigger portion is a Hall element, and the rotary member is connected to a magnetic member, wherein the power supply circuit of the motor is turned on when the magnetic member is close to the Hall element or in contact with the Hall element.

45. The power unit according to claim 42, wherein
the first switch further comprises an elastic member that provides a preload force between the operation member and the rotary member.

46. The power unit according to claim 43, wherein
when the operation member is operated such that the rotary member rotates from the first position to the second position, the rotary member is enabled by an elastic member to automatically return from the second position to the first position.

47. The power unit according to claim 42, wherein
the operation member is a cable, wherein one end of the operation member is connected to the rotary member, and another end of the operation member is connected to the execution device.

48. The power unit according to claim 41, comprising
a second switch for controlling a working state of the power supply assembly, wherein the second switch is further provided with an indicator light for indicating the working state of the power supply assembly, and the indicator light is configured to be capable of showing light of different colors or light of different shapes when the power supply assembly is in different states.

49. The power unit according to claim 48, wherein
the indicator light is arranged around the second switch.

50. The power unit according to claim 48, wherein
when the second switch is triggered so as to power the power supply assembly, the power supply assembly and the indicator light are turned on, and the indicator light shows the working state of the power supply assembly.

51. A power unit, which is configured to be connected to a garden or outdoor power execution device, comprising:
a housing formed with an accommodation space; and
a motor at least partially disposed in the accommodation space;
wherein the motor comprises a motor shaft, maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and the motor shaft comprises a first drive portion and a second drive portion; and
the power unit further comprises a first transmission portion mating with the first drive portion and a second transmission portion mating with the second drive portion, wherein the first transmission portion outputs a first transmission force, and the second transmission portion outputs a second transmission force.

52. The power unit according to claim 51, wherein
the motor shaft comprises a first end and a second end, wherein the first drive portion is disposed at the first end, and the second drive portion is disposed between the first end and the second end.

53. The power unit according to claim 52, wherein
the first drive portion is configured to be an external thread structure, and the first transmission portion is provided with an internal thread structure mating with the external thread structure.

54. The power unit according to claim 51, wherein
the second transmission portion comprises a transmission belt, a flywheel, and an output end, wherein the transmission belt connects the second drive portion to the output end and is capable of transmitting power from the second drive portion to the output end.

55. The power unit according to claim 51, wherein
a flywheel is configured to have a first state in which the flywheel is close to a transmission belt and a second state in which the flywheel is away from the transmission belt, wherein the transmission belt is compressed when the flywheel is in the first state, and the transmission belt is released when the flywheel is in the second state.

56. The power unit according to claim 51, wherein
the second drive portion is configured to be a gear structure or a pulley structure.

57. The power unit according to claim 51, wherein
the second drive portion is fixedly connected to the motor shaft, or the second drive portion and the motor shaft are integrally formed.

58. The power unit according to claim 51, wherein
the first drive portion coincides with the second drive portion, and the first transmission portion and the second transmission portion are both connected to the first drive portion or the second drive portion.

59. The power unit according to claim 51, wherein
the first transmission portion and the second transmission portion at least partially coincide with each other and are both connected to the first drive portion or the second drive portion.

60. A power transmission system, comprising:
a power unit; and
an execution device;
wherein the power unit comprises:
a housing formed with an accommodation space;
a motor disposed in the accommodation space; and
a power supply assembly for powering the motor and at least partially disposed on the housing;
wherein the execution device comprises a working accessory and walking assemblies; and
wherein the power unit is detachably connected to the execution device, and the motor comprises a motor shaft that comprises a first drive portion and a second drive portion,
wherein the first drive portion is used for driving the working accessory, and the second drive portion is used for driving the walking assemblies.

61. A power unit, which is configured to be connected to a garden or outdoor power execution device, comprising:
a housing formed with an accommodation space;
a motor disposed in the accommodation space; and
a control assembly for controlling the motor;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and
the housing is formed with an airflow inlet and an airflow outlet, and the motor is connected to or formed with a first fan, wherein the first fan is capable of forming a first heat dissipation air path when driven by the motor; and
the power unit further comprises a second fan disposed in the accommodation space,
wherein the second fan is capable of generating a second heat dissipation air path.

62. The power unit according to claim 61, wherein
the airflow outlet comprises a first air outlet and a second air outlet that are disposed on two sides of the housing.

63. The power unit according to claim 62, wherein
the power unit comprises a first heat dissipation mode and a second heat dissipation mode, wherein both the first fan and the second fan are turned on when the power unit is in the first heat dissipation mode; and
the first fan is turned on and the second fan is turned off when the power unit is in the second heat dissipation mode.

64. The power unit according to claim 63, wherein
when the power unit is in the first heat dissipation mode, a heat dissipation airflow flows in from the airflow inlet and flows out from the first air outlet and the second air outlet separately.

65. The power unit according to claim 63, wherein
when the power unit is in the second heat dissipation mode, a heat dissipation airflow flows in from the airflow inlet and the first air outlet and flows out from the second air outlet.

66. The power unit according to claim 63, wherein
the power unit comprises a first power interval and a second power interval and comprises a critical value between the first power interval and the second power interval, wherein the power unit is in the second heat dissipation mode when output power of the power unit is less than the critical value, and the power unit is in the first heat dissipation mode when the output power of the power unit is greater than or equal to the critical value.

67. The power unit according to claim 61, wherein
the first heat dissipation air path and the second heat dissipation air path at least partially coincide with each other.

68. The power unit according to claim 61, wherein
the first heat dissipation air path and the second heat dissipation air path are separated from each other.

69. The power unit according to claim 61, wherein
the airflow inlet is further provided with a cavity that comprises a baseplate and a passage, and the baseplate is oblique from top to bottom.

70. The power unit according to claim 61, wherein
the first fan has first power P1 and the second fan has second power P2, wherein a ratio of the first power P1 to the second power P2 is higher than or equal to 1 and lower than or equal to 10.

71. A power unit, which is configured to be connected to a garden or outdoor power execution device, comprising:
a housing formed with an accommodation space;
a motor at least partially disposed in the accommodation space; and
a control assembly for controlling the motor;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and
the housing comprises a first housing made of a first-type material and a second housing made of a second-type material, wherein the control assembly is at least partially connected to the first housing, and thermal conductivity of the first-type material is higher than thermal conductivity of the second-type material.

72. The power unit according to claim 71, wherein
the first-type material is a metal material, and the second-type material is a plastic material.

73. The power unit according to claim 71, wherein
an outer surface of the housing has a first surface area S1, the second housing has a second surface area S2 after the second housing is mounted to the power unit, and a ratio of the first surface area S1 to the second surface area S2 is higher than or equal to 1.5 and lower than or equal to 2.

74. The power unit according to claim 71, wherein
the control assembly is fixedly connected to the first housing.

75. The power unit according to claim 71, wherein
a distance between the control assembly and the first housing is less than a preset value.

76. The power unit according to claim 71, wherein
the control assembly comprises a first control board and a second control board, wherein the first control board is configured to extend substantially in a first plane, and the second control board is configured to extend substantially in a second plane; and the power unit further comprises a center plane extending substantially along a front and rear direction, and at least one of the first plane and the second plane intersects with the center plane.

77. The power unit according to claim 76, wherein
the first control board and the second control board intersect with each other and are in a "V" shape.

78. The power unit according to claim 76, further comprising:
a power supply assembly for driving the motor, wherein the housing further comprises a connection surface for a connection to at least part of the power supply assembly.

79. A power unit, which is configured to be connected to a garden or outdoor power execution device, comprising:
a housing formed with an accommodation space;
a motor at least partially disposed in the accommodation space; and
a control assembly for controlling the motor;
wherein the housing comprises a housing portion whose thermal conductivity is higher than or equal to 80 W/(m*K), and the control assembly is at least partially connected to the housing portion.

80. The power unit according to claim 79, wherein
the housing comprises a first housing made of a first-type material and a second housing made of a second-type material, wherein the first housing constitutes the housing portion, and thermal conductivity of the first-type material is higher than thermal conductivity of the second-type material.

81. A power unit, which is configured to be connected to a garden or outdoor power execution device, comprising:
a housing formed with an accommodation space;
a motor at least partially disposed in the accommodation space; and
a power supply assembly for powering the motor and at least partially disposed on the housing;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and
the power unit further comprises a protective cover for covering at least part of the power supply assembly, wherein the protective cover comprises a first cover body made of a first material and a second cover body made of a second material.

82. The power unit according to claim 81, wherein
the first cover body is fixedly connected to the second cover body.

83. The power unit according to claim 81, wherein
the power supply assembly comprises a first-type power supply and a second-type power supply, wherein the first-type power supply is arranged around the housing.

84. The power unit according to claim 81, wherein
the protective cover covers at least part of a first-type power supply.

85. The power unit according to claim 81, wherein
the first cover body is made of plastic, and the second cover body is made of metal.

86. The power unit according to claim 81, wherein
the housing comprises a first housing and a second housing, and the protective cover is disposed on the second housing and rotatable around a rotation shaft disposed on the second housing.

87. The power unit according to claim 81, wherein
a second housing is further formed with an extension portion, wherein the extension portion is connected to or formed with a rotation shaft, and the second housing is at least partially connected to the extension portion.

88. The power unit according to claim 81, wherein
a first housing is further formed with or connected to a connection assembly for a connection to the protective cover.

89. The power unit according to claim 81, wherein
a connection assembly is configured to be a magnetic member, and a buffer portion is further connected or formed around the magnetic member.

90. The power unit according to claim 81, further comprising:
a control assembly connected to the motor and the power supply assembly, wherein the control assembly comprises a circuit board, a heat dissipation plate, a motherboard, and a power management board that are integrated and assembled into the accommodation space.

91. A power unit applicable to a power tool, comprising:
a housing formed with an accommodation space;
a motor disposed in the accommodation space;
a power supply assembly for powering the motor and at least partially disposed on the housing; and
a first switch for controlling a working state of the power supply assembly;
wherein maximum output power P of the motor is greater than or equal to 1500 W and less than or equal to 5500 W, a mass M1 of the power unit is greater than or equal to 8 kg and less than or equal to 14.5 kg, and a ratio of the maximum output power P to the mass M1 is higher than or equal to 103.5 W/kg and lower than or equal to 687.5 W/kg; and
the first switch is further provided with an indicator light for indicating the working state of the power supply assembly, and the indicator light is configured to be capable of showing light of different colors or light of different shapes when the power supply assembly is in different states.

92. The power unit applicable to a power tool according to claim 91, wherein
the indicator light is electrically connected to the power supply assembly, and the first switch is electrically connected to the power supply assembly.

93. The power unit applicable to a power tool according to claim 91, wherein
the indicator light is arranged around the first switch.

94. The power unit applicable to a power tool according to claim 91, wherein
when the first switch is triggered so as to power the power supply assembly, the power supply assembly and the indicator light are turned on, and the indicator light shows the working state of the power supply assembly.

95. The power unit applicable to a power tool according to claim 91, further comprising
a power management board electrically connected to the power supply assembly and the first switch.

96. The power unit applicable to a power tool according to claim 95, wherein
when the first switch is triggered so as to power the power supply assembly, the power management board is capable of acquiring state information of the power supply assembly and transmitting the state information to the indicator light, and the indicator light shows the light of different colors according to the state information.

97. The power unit applicable to a power tool according to claim 91, wherein
the first switch is located on the housing and disposed on an outer surface of the housing where the first switch is capable of being triggered.

98. The power unit applicable to a power tool according to claim 91, further comprising:
a second switch for controlling a rotational speed of the motor, wherein the second switch is disposed on an outer surface of the housing where the second switch is capable of being triggered.

99. The power unit applicable to a power tool according to claim 91, further comprising:
a third switch for controlling an electric motor to start, wherein the third switch comprises a first terminal connected to the power supply assembly and a second terminal connected to an external terminal.

100. The power unit applicable to a power tool according to claim 99, wherein
the external terminal is connectable to a preset position and operable so as to control the electric motor.
